# EUROPEAN PATENT SPECIFICATION

(11) **EP 3 346 776 B1**
(45) Date of publication and mention of the grant of the patent: **03.07.2019**
(21) Application number: 17208834.6
(22) Date of filing: 20.12.2017
(51) Int. Cl.: H04W 56/00

(54) **METHOD AND APPARATUS FOR HANDLING UL TIMING ASYNCHRONISM IN A WIRELESS COMMUNICATION SYSTEM**
VERFAHREN UND VORRICHTUNG ZUR BEHANDLUNG VON UL-TIMING-ASYNCHRONISMUS IN EINEM DRAHTLOSKOMMUNIKATIONSSYSTEM
PROCÉDÉ ET APPAREIL DE GESTION D'ASYNCHRONISME DE TEMPORISATION UL DANS UN SYSTÈME DE COMMUNICATION SANS FIL

(30) Priority: 06.01.2017 US 201762443383 P
(43) Date of publication of application: 11.07.2018
(73) Proprietor: ASUSTek Computer Inc., Taipei City 112 (TW)
(72) Inventor: GUO, Yu-Hsuan, Taipei City 112 (TW); KUO, Richard Lee-Chee, Taipei City 112 (TW); TSAI, Hsin-Hsi, Taipei City 112 (TW)
(74) Representative: Hoefer & Partner Patentanwälte mbB

(56) References cited:
- EP-A2- 2 343 935
- EP-A2- 2 393 232
- EP-A2- 2 552 161
- ERICSSON: "Time alignment for Dual Connectivity", 3GPP DRAFT; R2-141162 - TIME ALIGNMENT FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 22 March 2014 (2014-03-22), XP050817749, Retrieved from the Internet: URL:http://www.3gpp.org/ftp/tsg_ran/WG2_RL 2/TSGR2_85bis/Docs/ [retrieved on 2014-03-22]

## Description

### TECHNICAL FIELD

The subject disclosure relates generally to communications systems, and specifically to timing advance values for multiple beams in a wireless communications system.

### BACKGROUND

The 3rd Generation Partnership Project (3GPP), which provides reference designs and identifies issues that require consideration and solutions for 5G, has identified many unresolved issues related to timing advance (TA) values, uplink (UL) timing asynchronism, and transmission via multiple beams and/or across multiple transmission/reception points (TRP). Inventions presented in the subject disclosure provide numerous solutions to those issues, including, for example, handling the maintenance of connections on other beams if the timing advance value for a particular beam has become invalid.

Document EP2552161 discloses a method of operating a UE according to the prior art.

### SUMMARY

Methods and apparatus are disclosed from the perspective of a UE (User Equipment) and are defined in the independent claims. The dependent claims define preferred embodiments thereof.

### BRIEF DESCRIPTION OF THE DRAWINGS

Various non-limiting embodiments are further described with reference to the accompanying drawings in which:
FIG. 1 illustrates a multiple access wireless communications system in accordance with one or more embodiments described herein;
FIG. 2 illustrates a multiple access wireless communications system compliant with the LTE standard;
FIG. 3 illustrates an example, non-limiting multiple access wireless communication system, in which a UE is in communication with multiple TRPs of a gNodeB, in accordance with one or more embodiments described herein;
FIG. 4 illustrates an example, non-limiting multiple access wireless communication system, in which a UE is in communication with one TRP of a gNodeB through multiple beams, in accordance with one or more embodiments described herein;
FIG. 5 illustrates an example, non-limiting multiple access wireless communication system, in which a timing advance value for one of a plurality of beams has become invalid, in accordance with one or more embodiments described herein;
FIG. 6 illustrates an example, non-limiting methodology for handling multiple TA values, in which a HARQ buffer associated with a serving cell is flushed if all of the multiple TA values become invalid, but refrains from being flushed if less than all of the multiple TA values become invalid;
FIG. 7 illustrates an example, non-limiting methodology for handling multiple TA values, in which a configuration for UL control signaling to be transmitted in the serving cell is cleared if all of the multiple TA values maintained become invalid, but refrains from being cleared if less than all of the multiple TA values become invalid;
FIG. 8 illustrates an example, non-limiting methodology for handling multiple TA values, in which a configuration for periodic resources for DL or UL transmissions in the serving cell is cleared if all of the multiple TA values maintained become invalid, but refrains from being cleared if less than all of the multiple TA values become invalid;
FIG. 9 illustrates an example, non-limiting methodology for handling multiple TA values, in which the status of remaining valid TA values is maintained if less than all of the multiple TA values become invalid;
FIG. 10 illustrates an example, non-limiting multiple access wireless communication system, in which a timing advance value associated for a first beam has become invalid, while the timing advance value for a second beam remains valid, in accordance with one or more embodiments described herein;
FIG. 11 illustrates a simplified block diagram of a network node and a mobile device, in accordance with one or more embodiments described herein;
FIG. 12 illustrates an alternative simplified block diagram of a communication device, in accordance with one or more embodiments described herein;
FIG. 13 illustrates a simplified block diagram of the program code shown in FIG. 12, in accordance with one or more embodiments described herein;
FIG. 14 illustrates a simplified block diagram of an embodiment of a wireless communications system that includes a transmitter system and a receiver system, in accordance with one or more embodiments described herein;
FIG. 15 illustrates an example, non-limiting methodology for handling a HARQ buffer and UL transmission in a UE that is maintaining at least two TA values; and
FIG. 16 illustrates an example, non-limiting methodology for maintaining at least two TA values in a UE.

### DETAILED DESCRIPTION

One or more embodiments are now described more fully hereinafter with reference to the accompanying drawings in which example embodiments are shown. In the following description, for purposes of explanation, numerous specific details are set forth in order to provide a thorough understanding of the various embodiments. However, the various embodiments can be practiced without these specific details (and without limitation to any particular network environment or standard).

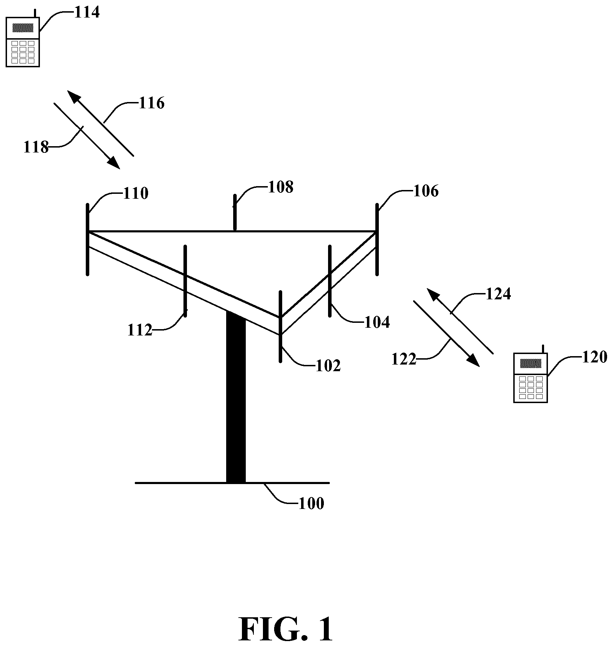

Referring initially to FIG. 1, illustrated is an example, non-limiting wireless communications system, in accordance with one or more embodiments described herein. The wireless communications system includes one or mobile devices (or UEs) **114** and **120,** and a network node **100.** UEs **114** and **120** can be in communication with network node **100** (e.g., eNodeB, eNB, gNodeB, gNB, network, cell, TRP, or other terminology). Antennas **102, 104, 106, 108, 110,** and **112** transmit and receive communications between network node **100** and mobile devices, including UEs **114** and **120.** It is noted that although various aspects are discussed with respect to two mobile devices and a single network node, the various aspects discussed herein can be applied to one or more mobile devices and/or one or more network nodes, and can be applied to different communications technologies, including Long Term Evolution (LTE, also referred to as 4G) standard, as specified in Third Generation Partnership Project (3GPP) Release 8 (Dec. 2008) and subsequent releases, and 5G. Further, UEs **114** and **120** and/or the network node **100** can be in communication with other user equipment or mobile devices (not shown) and/or other network nodes (not shown). A "link" is a communications channel that connects two or more devices or nodes. Uplinks (UL) **118** and **124** refer to links used for the transmission of signals from UEs **114** and **120,** respectively, to the network node **100.** Downlinks (DL) **116** and **122** refer to links used for the transmission of signals from network node **100** to UEs **114** and **120,** respectively.

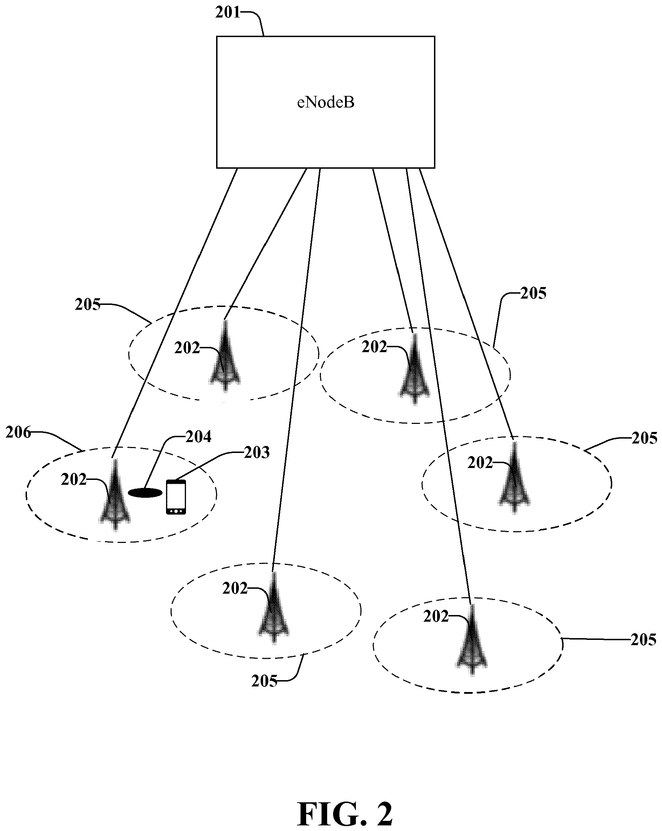

Turning to Figure 2, illustrated is an example, non-limiting wireless communications system utilizing LTE. An eNodeB **201** handles communications between a UE **203** and a core network (not shown). eNodeB **201** is communicatively coupled to remote radio heads **202,** each of which defines a cell **205.** As illustrated, a cell **206** that is handling communications for a particular UE **203** may be considered a serving cell **206.** UE **203** is located in serving cell **206,** and communications with eNodeB **201** through remote radio head **202** corresponding to serving cell **206,** and a transmission link **204.** For purposes of convenience, UL and DL transmissions are not shown separately but are illustrated as transmission link **204.** It should be noted that the UE **203** communicates only with the remote radio head for the cell in which the UE **203** is located, here, remote radio head **202** in serving cell **206.** Further, while the cells are illustrated as nonoverlapping, it will be understood that cells may overlap. LTE utilizes a relatively low frequency band (<6 GHz), and, as a result, cell coverage may be provided with a wide sector beam.

To account for propagation delay, LTE incorporates timing advance, which is derived from UL received timing, and sent from eNodeB **201** to UE **203.** Based on the timing advance value, the UE advances the timing of its transmissions to account for propagation delay, such that transmissions from multiple UEs are aligned with time with the receiver window of the eNodeB **201.** Timing advance in LTE is described in 3GPP TS 36.300 v.13.4.0 (July 2016), "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13),". As described in section 5.2.7.3 (uplink timing control) of 3GPP 36.300 v.13.4.0, the timing advance is derived from the UL received timing and sent by the eNB to the UE which the UE uses to advance its timings of transmissions to the eNB so as to compensate for propagation delay and thus time align the transmissions from different UEs with the receiver window of the eNB. The timing advance command for each timing advance group (TAG) is on a per need basis with a granularity in the step size of 0.52 µs (16×Ts). Section 10.1.2.7 provides a general description of timing advance, and is quoted below:
"In RRC_CONNECTED, the eNB is responsible for maintaining the timing advance. Serving cells having UL to which the same timing advance applies (typically corresponding to the serving cells hosted by the same receiver) and using the same timing reference cell are grouped in a timing advance group (TAG). Each TAG contains at least one serving cell with configured uplink, and the mapping of each serving cell to a TAG is configured by RRC. In case of DC, a TAG only includes cells that are associated to the same CG and the maximum number of TAG is 8.

For the pTAG the UE uses the PCell in MCG and the PSCell in SCG as timing reference. In a sTAG, the UE may use any of the activated SCells of this TAG as a timing reference cell, but should not change it unless necessary.

In some cases (e.g. during DRX), the timing advance is not necessarily always maintained and the MAC sublayer knows if the L1 is synchronised and which procedure to use to start transmitting in the uplink:
- as long as the L1 is non-synchronised, uplink transmission can only take place on PRACH.

For a TAG, cases where the UL synchronisation status moves from "synchronised" to "non-synchronised" include:
- Expiration of a timer specific to the TAG;
- Non-synchronised handover.

The synchronisation status of the UE follows the synchronisation status of the pTAG of MCG. The synchronisation status of the UE w.r.t. SCG follows the synchronisation status of the pTAG of SCG. When the timer associated with pTAG is not running, the timer associated with an sTAG in that CG shall not be running. Expiry of the timers associated with one CG does not affect the operation of the other CG.

The value of the timer associated to the pTAG of MCG is either UE specific and managed through dedicated signalling between the UE and the eNB, or cell specific and indicated via broadcast information. In both cases, the timer is normally restarted whenever a new timing advance is given by the eNB for the pTAG:
- restarted to a UE specific value if any; or
- restarted to a cell specific value otherwise.

The value of the timer associated to a pTAG of SCG and the value of a timer associated to an sTAG of an MCG or an sTAG of SCG are managed through dedicated signalling between the UE and the eNB, and the timers associated to these TAGs can be configured with different values. The timers of these TAGs are normally restarted whenever a new timing advance is given by the eNB for the corresponding TAG.

Upon DL data arrival or for positioning purpose, a dedicated signature on PRACH can be allocated by the eNB to the UE. When a dedicated signature on PRACH is allocated, the UE shall perform the corresponding random access procedure regardless of its L1 synchronisation status.

Timing advance updates are signalled by the eNB to the UE in MAC PDUs."

The LTE specification further provides for a configurable timer timeAlignmentTimer per TAG, resident on the MAC entity. The timeAlignmentTimer provides information on the time the MAC entity should consider the serving cells associated with the TAG to be uplink time aligned. A general description of maintenance of uplink time alignment may be found in section 5.2 of 3GPP TS 36.321 v.13.2.0 (June 2016), "3rd Generation Partnership Project; Technical Specification Group Radio Access Network; Evolved Universal Terrestrial Radio Access (E-UTRA); Medium Access Control (MAC) protocol specification (Release 13)," which is quoted below.

"The MAC entity shall:
- when a Timing Advance Command MAC control element is received:
   - apply the Timing Advance Command for the indicated TAG;
   - start or restart the *timeAlignmentTimer* associated with the indicated TAG.
- when a Timing Advance Command is received in a Random Access Response message for a serving cell belonging to a TAG:
   - if the Random Access Preamble was not selected by the MAC entity:
      - apply the Timing Advance Command for this TAG;
      - start or restart the *timeAlignmentTimer* associated with this TAG.
   - else, if the *timeAlignmentTimer* associated with this TAG is not running:
      - apply the Timing Advance Command for this TAG;
      - start the *timeAlignmentTimer* associated with this TAG;
      - when the contention resolution is considered not successful as described in subclause 5.1.5, stop *timeAlignmentTimer* associated with this TAG.
   - else:
      - ignore the received Timing Advance Command.
- when a *timeAlignmentTimer* expires:
   - if the *timeAlignmentTimer* is associated with the pTAG:
      - flush all HARQ buffers for all serving cells;
      - notify RRC to release PUCCH for all serving cells;
      - notify RRC to release SRS for all serving cells;
      - clear any configured downlink assignments and uplink grants;
      - consider all running *timeAlignmentTimers* as expired;
   - else if the *timeAlignmentTimer* is associated with an sTAG, then for all Serving Cells belonging to this TAG:
      - flush all HARQ buffers;
      - notify RRC to release SRS;
      - notify RRC to release PUCCH, if configured.

When the MAC entity stops uplink transmissions for an SCell due to the fact that the maximum uplink transmission timing difference (as described in subclause 7.9.2 of TS 36.133 [9]) or the maximum uplink transmission timing difference the UE can handle between TAGs of any MAC entity of the UE is exceeded, the MAC entity considers the *timeAlignmentTimer* associated with the SCell as expired.

The MAC entity shall not perform any uplink transmission on a Serving Cell except the Random Access Preamble transmission when the *timeAlignmentTimer* associated with the TAG to which this Serving Cell belongs is not running. Furthermore, when the *timeAlignmentTimer* associated with the pTAG is not running, the MAC entity shall not perform any uplink transmission on any Serving Cell except the Random Access Preamble transmission on the SpCell.

The MAC entity shall not perform any sidelink transmission which is performed based on UL timing of the corresponding serving cell and any associated SCI transmissions when the corresponding *timeAlignmentTimer* is not running.

NOTE: A MAC entity stores or maintains N_{TA} upon expiry of associated *timeAlignmentTimer,* where N_{TA} is defined in [7]. The MAC entity applies a received Timing Advance Command MAC control element and starts associated *timeAlignmentTimer* also when the *timeAlignmentTimer* is not running."

A general description of UE actions upon receiving a PUCCH/SRS release request may be found in section 5.3.13 of 3GPP TS 36.331 v. 14.0.0 (Sept. 2016), "3rd Generation Partnership project; Technical Specification Group Radio Access Network' Evolved Universal Terrestrial Radio Access (E-UTRA); Radio Resource Control (RRC); Protocol specification (Release 14)," which is quoted below.
"Upon receiving a PUCCH release request from lower layers, for an indicated serving cell the UE shall:
   1> apply the default physical channel configuration for *cqi-ReportConfig* for the indicated serving cell as specified in 9.2.4 and release *cqi-ReportConfigSCell,* for each SCell that sends HARQ feedback on the indicated serving cell, if any;
   1> apply the default physical channel configuration for *schedulingRequestConfig* as specified in 9.2.4, for the concerned CG;
Upon receiving an SRS release request from lower layers, for an indicated serving cell the UE shall:
   1> apply the default physical channel configuration for *soundingRS-UL-ConfigDedicated,* as specified in 9.2.4;
   NOTE: Upon PUCCH/ SRS release request, the UE does not modify the *soundingRS-UL-ConfigDedicatedAperiodic* i.e. it does not apply the default for this field (release)."

Configured downlink assignment, e.g., for Semi-Persistent Scheduling (SPS) DL transmissions, and configured UL grant, e.g., for SPS UL transmissions, are supported in LTE. Section 5.10 (and subsections thereto) of 3GPP TS 36.321 v.13.2.0 provides a general description of Semi-Persistent Scheduling, and is quoted below:

### "5.10 Semi-Persistent Scheduling

When Semi-Persistent Scheduling is enabled by RRC, the following information is provided [8]:
- Semi-Persistent Scheduling C-RNTI;
- Uplink Semi-Persistent Scheduling interval *semiPersistSchedIntervalUL* and number of empty transmissions before implicit release *implicitReleaseAfter,* if Semi-Persistent Scheduling is enabled for the uplink;
- Whether *twoIntervalsConfig* is enabled or disabled for uplink, only for TDD;
- Downlink Semi-Persistent Scheduling interval *semiPersistSchedIntervalDL* and number of configured HARQ processes for Semi-Persistent Scheduling *numberOfConfSPS-Processes,* if Semi-Persistent Scheduling is enabled for the downlink;

When Semi-Persistent Scheduling for uplink or downlink is disabled by RRC, the corresponding configured grant or configured assignment shall be discarded. Semi-Persistent Scheduling is supported on the SpCell only.

Semi-Persistent Scheduling is not supported for RN communication with the E-UTRAN in combination with an RN subframe configuration.
NOTE: When eIMTA is configured for the SpCell, if a configured uplink grant or a configured downlink assignment occurs on a subframe that can be reconfigured through eIMTA L1 signalling, then the UE behaviour is left unspecified.

### 5.10.1 Downlink

After a Semi-Persistent downlink assignment is configured, the MAC entity shall consider sequentially that the N^{th} assignment occurs in the subframe for which:
- (10 ^{∗} SFN + subframe) = [(10 ^{∗} SFN_{start time} + subframe_{start time}) + N ^{∗} *semiPersistSchedIntervalDL*] modulo 10240.
Where SFNₛₜₐᵣₜ time and subframeₛₜₐᵣₜ time are the SFN and subframe, respectively, at the time the configured downlink assignment were (re-)initialised.

### 5.10.2 Uplink

After a Semi-Persistent Scheduling uplink grant is configured, the MAC entity shall:
- if *twoIntervalsConfig* is enabled by upper layer:
   - set the Subframe_Offset according to Table 7.4-1.
- else:
   - set Subframe Offset to 0.
- consider sequentially that the N^{th} grant occurs in the subframe for which:
   - (10 ^{∗} SFN + subframe) = [(10 ^{∗} SFN_{start time} + subframe_{start time}) + N ^{∗} *semiPersistSchedIntervalUL* + Subframe_Offset ^{∗} (N modulo 2)] modulo 10240.
Where SFN_{start time} and subframe_{start time} are the SFN and subframe, respectively, at the time the configured uplink grant were (re-)initialised.

The MAC entity shall clear the configured uplink grant immediately after *implicitReleaseAfter* [8] number of consecutive new MAC PDUs each containing zero MAC SDUs have been provided by the Multiplexing and Assembly entity, on the Semi-Persistent Scheduling resource.
NOTE: Retransmissions for Semi-Persistent Scheduling can continue after clearing the configured uplink grant."

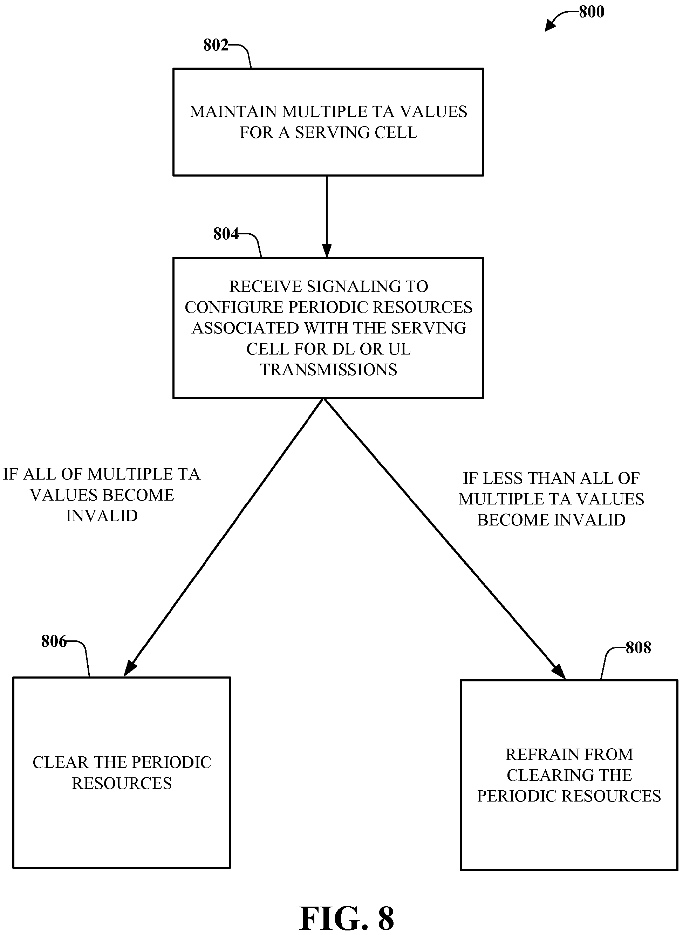

Section 6.1.3.5 of 3GPP TS 36.321 v13.2.0 provides a general description of Timing Advance Command MAC Control Element, and is quoted in part below:
"The Timing Advance Command MAC control element is identified by MAC PDU subheader with LCID as specified in table 6.2.1-1.
It has a fixed size and consists of a single octet defined as follows (Figure 8):
   - TAG Identity (TAG Id): This field indicates the TAG Identity of the addressed TAG. The TAG containing the SpCell has the TAG Identity 0. The length of the field is 2 bits;
   - Timing Advance Command: This field indicates the index value *T_{A}* (0, 1, 2... 63) used to control the amount of timing adjustment that MAC entity has to apply (see subclause 4.2.3 of [2]). The length of the field is 6 bits."

A general description of transmission timing elements may be found in section 4.2.3 of 3GPP TS 36.213 v.13.2.0 (June 2016), "3rd Generation Partnership Project; Technical Specification Group Radio Access Network; Evolved Universal Terrestrial Radio Access (E-UTRA); Physical layer procedures (Release 13)," which is quoted below.
"Upon reception of a timing advance command for a TAG containing the primary cell, the UE shall adjust uplink transmission timing for PUCCH/PUSCH/SRS of the primary cell based on the received timing advance command. The UL transmission timing for PUSCH/SRS of a secondary cell is the same as the primary cell if the secondary cell and the primary cell belong to the same TAG.
Upon reception of a timing advance command for a TAG not containing the primary cell, the UE shall adjust uplink transmission timing for PUSCH/SRS of all the secondary cells in the TAG based on the received timing advance command where the UL transmission timing for PUSCH /SRS is the same for all the secondary cells in the TAG.
The timing advance command for a TAG indicates the change of the uplink timing relative to the current uplink timing for the TAG as multiples of 16 *Tₛ*. The start timing of the random access preamble is specified in [3].
In case of random access response, an 11-bit timing advance command [8], *T_{A},* for a TAG indicates *N_{TA}* values by index values of *T_{A}* = 0, 1, 2, ..., 1282, where an amount of the time alignment for the TAG is given by *N_{TA}* = *T_{A}* ×16*. N_{TA}* is defined in [3].
In other cases, a 6-bit timing advance command [8], *T_{A},* for a TAG indicates adjustment of the current *NTA* value, *N_{TA,old},* to the new *NTA* value, *N_{TA,new},* by index values of *T_{A}* = 0, 1, 2,..., 63, where *N_{TA,new}* = *N_{TA,old}* + (*T_{A}* -31)×16. Here, adjustment *of N_{TA}* value by a positive or a negative amount indicates advancing or delaying the uplink transmission timing for the TAG by a given amount respectively.
For a timing advance command received on subframe n, the corresponding adjustment of the uplink transmission timing shall apply from the beginning of subframe *n+6.* For serving cells in the same TAG, when the UE's uplink PUCCH/PUSCH/SRS transmissions in subframe *n* and subframe *n*+1 are overlapped due to the timing adjustment, the UE shall complete transmission of subframe n and not transmit the overlapped part of subframe *n*+1.
If the received downlink timing changes and is not compensated or is only partly compensated by the uplink timing adjustment without timing advance command as specified in [10], the UE changes N_{TA} accordingly."

Currently under development by the 3GPP is a standard for 5G wireless communications. As identified in ITU-R IMT-2020, the next generation of radio access technology will support enhanced Mobile Broadband (eMBB), massive Machine Type Communications (mMTC), and URLLC (Ultra-Reliable and Low Latency Communications (URLLC).

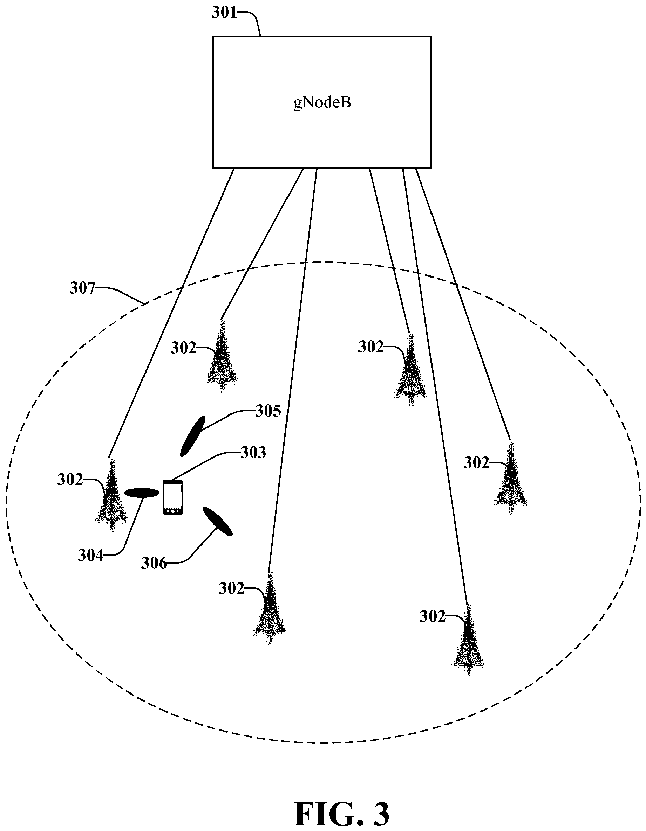

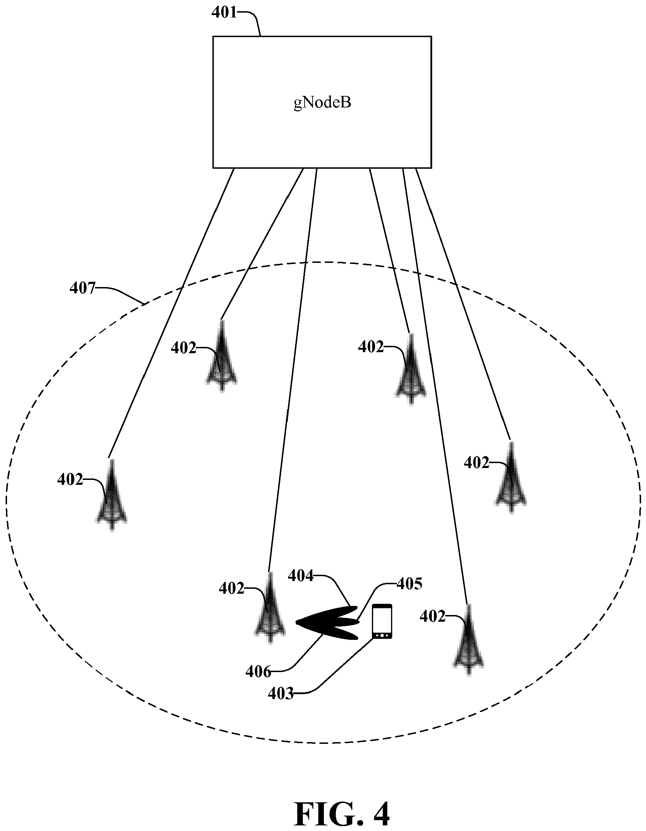

Illustrated in FIG. 3 is an example, non-limiting wireless communication system using 5G new radio (NR). gNodeB **301** is coupled to transmission/receiving points (TRP) **302,** which together define a serving cell **307.** Unlike LTE, UE **303** may communicate with gNodeB **301** simultaneously through multiple transmission links **304, 305,** and **306,** connected to different TRPs **302,** respectively. It will be appreciated that alternative architectures for 5G deployment may exist. For example, as illustrated in FIG. 4, UE **403** maybe connected to a single TRP **402** in serving cell **407** through multiple transmission links (beams) **404, 405,** and **406.** Alternatively, a gNodeB **401** may include multiple serving cells, and UE **403** may be connected to gNodeB **401** through separate serving cells. Moreover, a gNodeB **401** may be associated with one or multiple TRPs **402.**

5G is expected to utilize a wider frequency spectrum than LTE, with transmissions up to at least 100 GHz (compared to <6 GHz for LTE). However, at higher radio frequencies, radio propagation and path loss become more of a challenge. At the same antenna gain, cell coverage is reduced at higher frequencies, necessitating higher gain antennas. Utilizing wide sector beam on higher frequencies (>> 6GHz), the cell coverage is reduced at the same antenna gain. Thus, in order to provide required cell coverage on higher frequency bands, higher antenna gain is needed to compensate for increased path loss. To increase antenna gain, larger antenna arrays (tens to hundreds of antennas) are needed to form high gain beams. These high gain beams are narrower than wide sector beams, as used in LTE, so multiple high gain beams are needed to cover the same cell area in 5G. The number of concurrent high gain beams that access point is able to form may be limited by the cost and complexity of the utilized transceiver architecture. In practice, on higher frequencies, the number of high gain beams will be much lower than those required to cover the entire cell area simultaneously. In other words, the access point is able to cover only part of the cell area by using a subset of beams at any given time.

It should be noted that, in the lack of applicable nomenclature, terms used in LTE are used in this disclosure for analogous or identical features or functions in 5G, but the use of such terms should not be considered as limiting.

Beamforming is a signal processing technique, that, in effect, allows high gain beams to be directed to particular areas for transmission/reception. Elements from phased array multiple antennas can be combined in such a way that signals at particular angles are subject to constructive interference, and at other angles, destructive interference. The signals subject to constructive interference comprise a high gain beam. By controlling the angles at which the signals are transmitted, a high gain beam may be directed to a desired location by a TRP. Different beams can be utilized simultaneously using multiple arrays of antennas. It should be noted here that beamforming may also be utilized by a UE as well as a TRP.

Potential mobility types to be accommodated for NR can include: intra-TRP mobility, inter-TRP mobility, or inter-NR eNB mobility. The coverage area of an individual high gain beam may be small, down to the order of some tens of meters in width. As a consequence, channel quality degradation outside the current serving beam area is more rapid than in the case of wide area coverage, as provided by LTE. The reliability of a system relying solely on beamforming and operating in higher frequencies may not be satisfactory, or fail to meet requirements, since the coverage may be more sensitive to both time and space variations. As a consequence, the SINR of that narrow link can drop much more rapidly than in LTE.

Hence, two levels of network controlled mobility are to be supported. One level is RRC driven at "cell" level mobility. Cell selection/reselection is used when the UE is in IDLE state and handover handled by RRC is used when the UE is in CONNECTED state. Another level is beam level management. Layer 1 handles appropriate selection of the TRP to use for a UE and the optimal beam direction. 5G systems are expected to rely more heavily on "beam based mobility" to handle UE mobility, in addition to regular handover based UE mobility. All mobility within the coverage area of one 5G node could in theory be handled based on beam level management, which would leave handovers only to be used for mobility to the coverage area of another 5G node. A 5G UE should be able to adapt the serving beam to maintain 5G connectivity subject to beam quality fluctuation or UE intra-cell mobility. Accordingly, a 5G NodeB and UE should be able to track and change the serving beam properly (referred to as beam tracking).

For the purposes of this disclosure, the following terms may be used, and exemplary and non-limiting descriptions are provided. The term "base station" (BS), as used in the subject disclosure, refers to a network central unit or a network node in the NR that could be used to control one or multiple TRPs associated with one or multiple cells. Communication between BS and TRP(s) can occur via a fronthaul connection. A BS could be referred to as central unit (CU), eNB, gNB, or NodeB. A "TRP," as used herein, is a transmission and reception point that provides network coverage and directly communicates with UEs. A TRP could be referred to as a distributed unit (DU). A "cell," as used herein, could be composed of one or multiple associated TRPs, i.e., the coverage of the cell is a superset of the coverage of all the individual TRP(s) associated with the cell. One cell could be controlled by one BS. A cell can be referred to as a TRP group (TRPG). "Beam sweeping" could be used to cover all possible directions for transmission and/or reception. For beam sweeping, numerous beams are required. As it is not possible to generate all these beams concurrently, beam sweeping means generation of a subset of these beams in one time interval and generation of different subsets of beam(s) in other time interval(s). Stated differently, beam sweeping means changing beams in time domain, such that all possible directions could be covered after several time intervals. "Beam sweeping number" refers to the necessary number of time interval(s) needed to sweep beams in all possible directions once for transmission and/or reception. The beam sweeping number indicates the number of times during a predetermined time period that various different subsets of beams must be generated to cover the desired area. A "serving beam" for a UE is a beam generated by a network node, e.g. TRP, which is used to communicate with the UE, e.g. for transmission and/or reception. The serving beam may be a qualified beam. A "candidate beam" for a UE is a candidate of a serving beam. A serving beam may or may not be a candidate beam. A candidate beam may be a qualified beam. A "qualified beam" is a beam with radio quality, based on measuring signal on the beam, better than a threshold.

As illustrated in FIGs. 3 and 4, a gNodeB may have multiple TRPs, each TRP being able to form one or more beams. For purposes of this disclosure, the beam may be a TRP beam, a beam generated by a TRP, or a beam generated by a gNodeB. While the architecture illustrated in FIGs. 3 and 4 illustrate a single cell in which beamforming is utilized, it is possible that a different, co-existing cell may not utilize beamforming communicate with a UE. The TRPs 302 and 402 may apply beamforming to both data and control signaling transmissions and/or receptions, if desired. The number of beams and the number of simultaneous beams in a particular time/frequency domain depends on the number of antenna array elements and the radio frequencies used by the TRP. The capabilities of TRPs **302** and **402** in serving cells **307** and **407** may differ, such that the number of beams generated concurrently by different TRPs may differ. TRPs **302** and **402** may need to perform beam sweeping, e.g., in order to provide control signaling in every direction. TRPs **302** and **402** may not support all beam combinations, e.g., some beams could not be generated concurrently. The downlink timing of all TRPs **302** and **402** in the serving cells **307** and **407** are synchronized. Further, the TRPs **302** and **402** may support UEs **303** and **403,** whether or not the UEs **303** and **403** has beamforming capability.

The UE may perform beamforming on the downlink and the uplink. As illustrated in FIGs. 3 and 4, UEs **303** and **403** utilize beamforming to connect to TRPs **302** and **402** through transmission links **304, 305,** and **306,** and **404, 405,** and **406,** respectively. The UEs **303** and **403** may generate one or more beams concurrently, depending on its capability, and the beams could be wider than the beams generated by the TRPs **302** and **402** (or cell **307** and **407,** or gNodeB **301** and **401**). While generally not needed for transmission and/or reception of user data, beam sweeping may be necessary for other signaling, e.g., performing measurements. If hybrid beamforming - which involves analog beamforming in the RF domain and digital beamforming at the baseband - is used, the UEs **303** and **403** may not support all beam combinations, such that some beams cannot be formed concurrently.

The UEs connected to gNodeB may vary widely in capability. A connected UE may or may not utilize or support beamforming at all. Moreover, a UE may be able to generate multiple beams concurrently and to be served by multiple serving beams from one or multiple TRPs in one serving cell. As illustrated in FIGs. 3 and 4, UEs **303** and **403** are capable of transmitting over multiple beams **304, 305,** and **306,** and **404, 405,** and **406,** respectively. In FIG. 3, UE **303** has generated three beams, each connected to a different TRP **302.** In comparison, FIG 4 illustrates a scenario in which UE **403** communicates over multiple beams to a single TRP **402.** In addition, the same or different DL or UL data may be transmitted on the same radio resource over different beams for diversity or throughput gain. In communicating with TRPs **302** and **402,** UEs **303** and **403** each have at least two RRC states: a connected state (or active state) and non-connected (or inactive state or idle state). Inactive state may be an additional state or belong to connected or non-connected state.

Where beamforming is used by both the gNodeB **301** and **401**/TRPs **302** and **402** and UEs **303** and **403,** antenna gain is expected to be 15-30 dBi by the gNodeB **301** and **401**/TRPs **302** and **402,** and 3-20 dBi by the UEs **303** and **403.** With respect to SINR, beamforming reduces interference power from neighbors, e.g., neighbor gNodeBs on the downlink, or other UEs connected to neighbor gNodeBs. On the transmission side, only interference from other transmitters whose current beams point in the same direction to the receiver will be considered "effective" interference, i.e., interference power higher than effective noise power. On the reception side, effective interference will constitute only interference from other transmitters whose beam direction is the same as the UE's current reception beam direction.

In FIG. 3, UE **303** is depicted as connected to three different TRPs **302.** As different TRPs **302** may have different network coverage sizes, different UL timing advance (TA) values may be required for UL transmissions to TRPs **302,** and those different values need to be maintained by the UE **303.** Each maintained TA value is for one or more multiple TRPs **302** or for one more beams of the TRPs **302** (e.g., beams **304, 305,** and **306**). A maintained TA value may become invalid if a timer, such as timeAlignmentTimer, associated with the maintained TA value expires, if the UE **303** is no longer served by the corresponding TRPs **302** due to UE mobility or network decision, or if the UE is released by network indication. If no associated TA value is valid, for the UL, the UL timing will be considered asynchronous. The same considerations apply to FIG. 4, as a separate TA value may be maintained for each beam **404, 405,** and **406** used to communicate with a single TRP **402.**

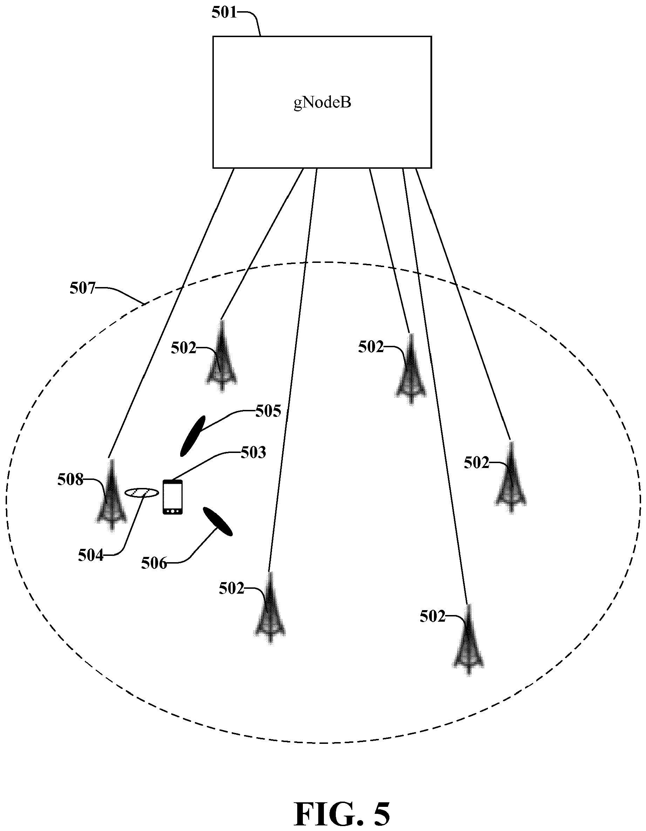

FIG. 5 illustrates an example non-limiting aspect of this disclosure, in which UE **503** is connected to three TRPs **502** in serving cell **507** through transmission links **504, 505,** and **506.** The maintained TA value for transmission link **504** has become invalid, and the UE **503** will not perform UL transmission to TRP **508** or beams associated with the same TA value. However, the maintained TA values for transmission links **505** and **506** remain valid. Consequently, if the maintained TA value for transmission link has become invalid, transmission to the other TRPs **502** or via other beams should not be affected. In view of the differences from LTE with respect to radio access technology, which utilizes a single transmission link between a UE and an eNodeB/remote radio head, a need exists for a mechanism to maintain UL transmissions for TRPs or beams whose associated maintained TA values are valid, even if one or more of the other maintained TA values becomes invalid.

While FIGs. 3, 4 and 5 illustrate a UE in one serving cell, the UE need not be limited to one serving cell. It is possible for the UE to have multiple serving cells, and the serving cells may be associated with the same or different gNodeBs.

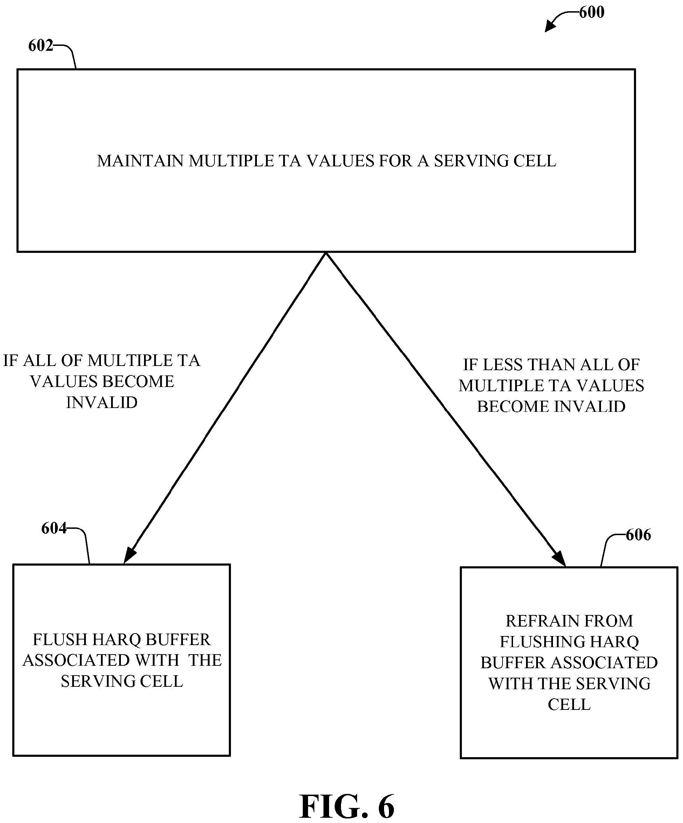

FIG. 6 illustrates an example, non-limiting methodology for handling a HARQ buffer in a UE that is maintaining multiple TA values. At Step **602** of flow diagram **600,** the UE maintains multiple TA values for a serving cell, wherein the TA values include at least a first TA value and a second TA value. If all of the multiple TA values have become invalid, then the UE will not perform UL transmissions (for data stored in the HARQ buffer) to any TRP of the serving cell to which the UE was connected. Thus, at Step **604,** the UE will flush a HARQ buffer associated with the serving cell, clearing the HARQ buffer of any UL data to be transmitted, e.g., MAC PDU(s). Flushing the HARQ buffer may result in the data stored therein not being transmitted or retransmitted. However, if not all of the maintained TA values are invalid, i.e., at least one maintained TA value remains valid (e.g., the first TA value is invalid and the second TA value is valid), then data in the HARQ buffer can still be transmitted or retransmitted to the TRP or via another beam associated with the valid maintained TA value. Accordingly, at Step **606,** the UE will refrain from flushing the HARQ buffer.

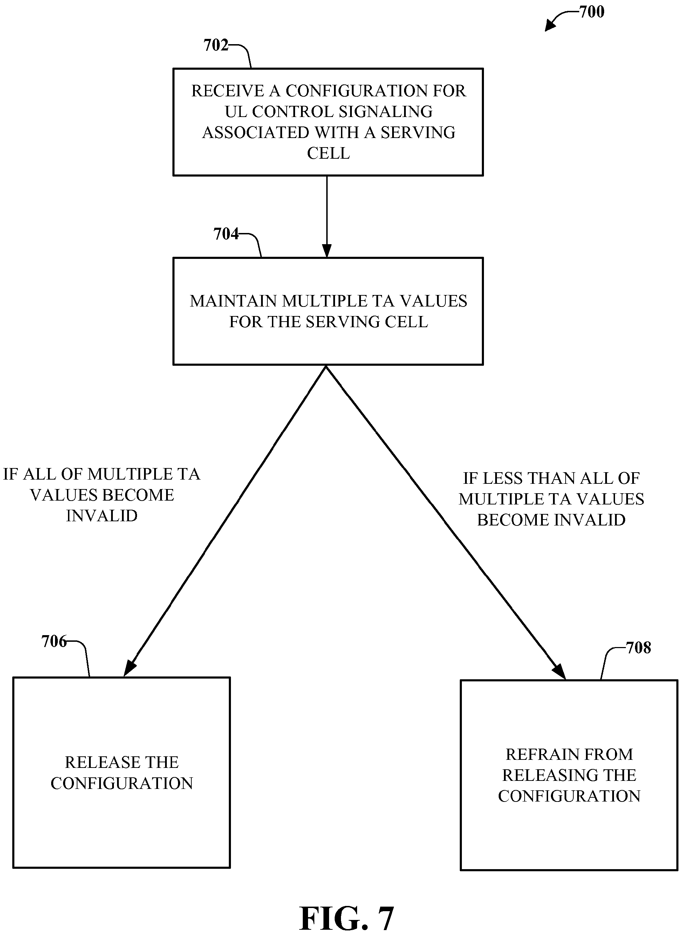

FIG. 7 illustrates an example non-limiting methodology for handling configurations in a UE that is maintaining multiple TA values. At Step **702** of flow diagram **700,** the UE receives a configuration for UL control signaling associated with a serving cell, e.g., the UL control signaling is to be transmitted in the serving cell. The UL control signaling may comprise, for example, a scheduling request, a sounding reference signal (SRS), a periodic or aperiodic UL reference signal, or a periodic or aperiodic CQI report. The configuration could be associated with multiple TA values, which are maintained in the UE. The association between a configuration and a TRP or beam can be established based on information provided by a network node, e.g., a TRP or gNodeB. At Step **704,** the UE maintains multiple TA values for a serving cell, wherein the TA values include at least a first TA value and a second TA value. If all of the multiple TA values have become invalid, then, at Step **706,** the configuration will be released. The configuration may be released (or may be stopped or suspended) if the serving TRPs, serving beams, and/or candidate beams (candidate for a serving beam) associated with the configuration is released or not present based on e,g., UE detection or network command. The release of the configuration may result in the UL control signaling based on that configuration not being transmitted, e.g., in the serving cell. However, if less than all of the multiple TA values have become invalid, i.e., at least one maintained TA value remains valid (e.g., the first TA value is invalid and the second TA value is valid), then, at step **708,** the UE refrains from releasing the configuration. For example, if the configured configuration for UL control signaling could be applicable to the TRP(s) or the beam(s) associated with the invalid TA value as well as other TRP(s) or other beam(s), associated with valid TA value(s), of the same cell, e.g. the configuration is applicable for the cell, the configured configuration could be kept using in the cell.

FIG. 8 illustrates an example, non-limiting methodology for handling periodic resources (or a configured downlink assignment, e.g., SPS DL transmission, or configured uplink grant, e.g., SPS UL transmission) in a UE that is maintaining multiple TA values. The periodic resources may be applicable to the serving cell, e.g., applicable to all TRPs or beams of the serving cell. At Step **802** of flow diagram **800,** the UE maintains multiple TA values for a serving cell, wherein the TA values include at least a first TA value and a second TA value. At Step **804,** the UE receives signaling to configure periodic resources associated with the serving cell for DL or UL transmissions. The DL or UL transmissions are to be performed in the serving cell. The association between a periodic resource (or configured downlink assignment or configured uplink grant) and a TRP or beam can be established based on information provided by a network node, e.g., TRP, gNodeB. If all of the multiple TA values have become invalid, then, at Step **806,** the periodic resources will be cleared. The periodic resources may be cleared (or may be stopped or suspended) if the serving TRPs, serving beams, and/or candidate beams (candidate for a serving beam) associated with the configured downlink assignment or the configured uplink grant is released or not present based on e,g., UE detection or network command. Clearing the periodic resources may result in UL transmissions based on the periodic resources not being transmitted, or DL transmissions based on the periodic resources not being received. However, if less than all of the multiple TA values have become invalid, i.e., at least one maintained TA value remains valid (e.g., the first TA value is invalid and the second TA value is valid), then, at Step **808,** the UE refrains from clearing the periodic resources. For example, if the configured downlink assignment or the configured uplink grant could be applicable to the TRP(s) or the beam(s) associated with the invalid TA value as well as other TRP(s) or other beam(s), associated with valid TA value(s), of the same cell, the configured downlink assignment or the configured uplink grant could be kept using in the cell.

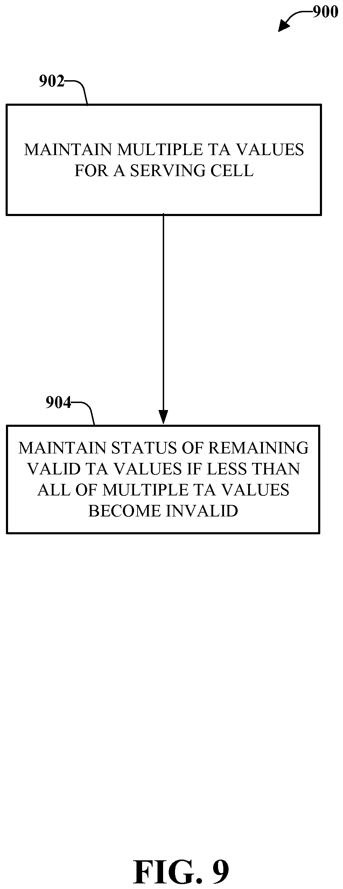

FIG. 9 illustrates an example, non-limiting methodology for handling the status of a TA value in a UE that is maintaining multiple TA values. At Step **902** of flow diagram **900,** the UE maintains multiple TA values for a serving cell, wherein the TA values include at least a first TA value and a second TA value. If less than all of the maintained TA values have become invalid, i.e., if at least one of the maintained TA values is valid, the validity of the other maintained values should remain unaffected. For example, the status of the second TA value will be unchanged if any of the other multiple TA values (e.g., the first TA value) becomes invalid. Accordingly, at Step **904,** the status for any remaining maintained TA value will be maintained, e.g., as valid, and will not be changed. In other words, the maintained TA value becoming invalid should not affect validity of other maintained TA value(s) associated with the same cell. For example, if a timeAlignmentTimer associated with a TA value expires, the status of other timeAlignmentTimers associated with other valid TA values is not changed.

A change in a serving TRP may be detected by the UE based on UE measurement, e.g., RSRP of the serving TRP. In addition, a change in a serving beam or candidate beam may be detected by the UE based on UE measurement, e.g., RSRP of the serving beam or candidate beam. The serving TRP or beam could be released or considered as not present if the RSRP of the serving TRP or beam is not detected or below a threshold.

The association between a TA value to be maintained and a TRP or a beam could be established based on information provided by a network node, e.g., a TRP or gNodeB. The association between a TA value to be maintained and a beam could be established based on the content of a (beam specific) reference signal. In addition, the serving cell may be the only serving cell for the UE or the UE could have multiple serving cells.

In another aspect of this disclosure, which might be combined with the above aspects and/or methodologies, the multiple TA values, e.g., the first TA value and the second TA value, could be used for UL transmissions via different beams of the serving cell. The UL transmissions could be transmitted to different TRPs of the serving cell. Moreover, a maintained TA value could be associated with a timer. The validity of the maintained TA value is related to the status of the timer. For example, the maintained TA value is considered invalid if the timer expires. The maintained TA value is considered valid if the timer is running.

A maintained TA value may be considered as invalid if the TRP (or all TRPs in the case of multiple TRPs for a maintained TA value) associated with the maintained TA value is not detectable (e.g., RSRP of the TRP(s) is lower than a threshold), all TRP(s) or beam(s) associated with the maintained TA value is not serving TRP(s) of the UE (e.g., based on indication from network or detection by the UE), all beam(s) associated with the maintained TA value is not qualified (e.g., RSRP of the beam(s) is lower than a threshold), and/or all beam(s) associated with the maintained TA value is not candidate beam(s) of the UE (e.g., based on indication from network or detection by the UE). The UE may stop a timer associated with the maintained TA value if the maintained TA value is considered as invalid.

In another aspect of this disclosure, which might be combined with the above aspects and/or methodologies, the UE may clear periodic resources (or a configured downlink assignment or a configured uplink grant) associated with the serving cell, if all the multiple TA values are invalid and refrain from clearing the periodic resources (or the configured downlink assignment or the configured uplink grant) if the first TA value becomes invalid and the second TA value is still valid. Alternatively, the UE could clear the periodic resources if the first TA value becomes invalid and the second TA value is still valid. The periodic resources are associated with the first TA value or are applicable to beam(s) associated with the first TA value.

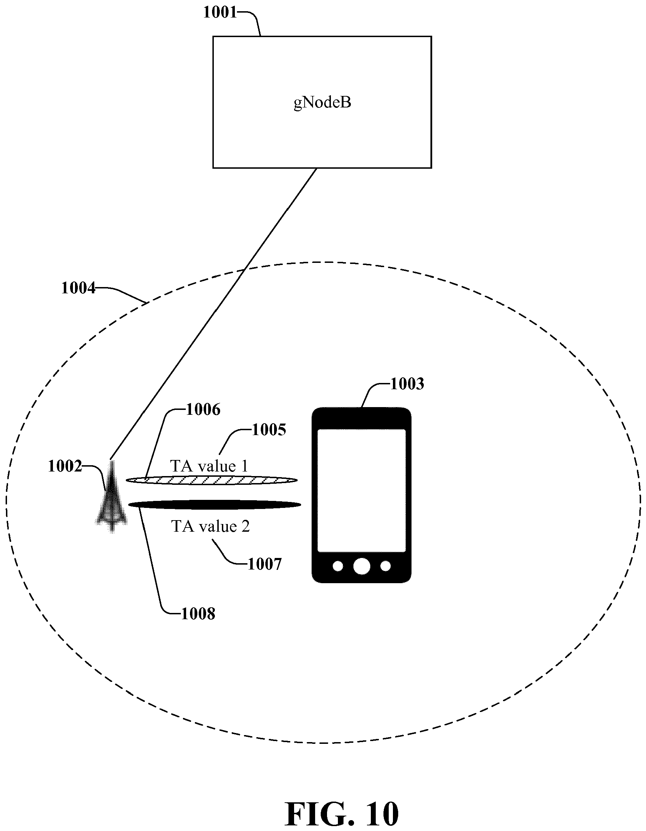

FIG. 10 illustrates an example, non-limiting communication system utilizing an aspect of the disclosure. gNodeB **1001** controls serving cell **1004** through TRP **1002.** Utilizing, e.g., beamforming techniques, UE **1003** is able send transmissions to and receive transmission from TRP **1002** through a first beam **1006** and a second beam **1008.** First beam **1006** is associated with a TA value 1 **1005,** and second beam **1008** is associated with a TA value 2 **1007.** As discussed in this disclosure, TA value 1 **1005** may become invalid. Accordingly, UE 1003 will cease transmission over first beam **1006** while maintaining transmission over second beam **1008.** For purposes of simplicity, one TRP **1002** is illustrated, but it will be understood that alternative configurations of the communication system illustrated in FIG. 10 are within the scope of the disclosure. For example, gNodeB **1001** may be connected to multiple TRPs in serving cell **1004.** Moreover, UE **1003** may communicate with gNodeB **1001** through multiple beams and multiple TRPs, as illustrated in FIG. 3.

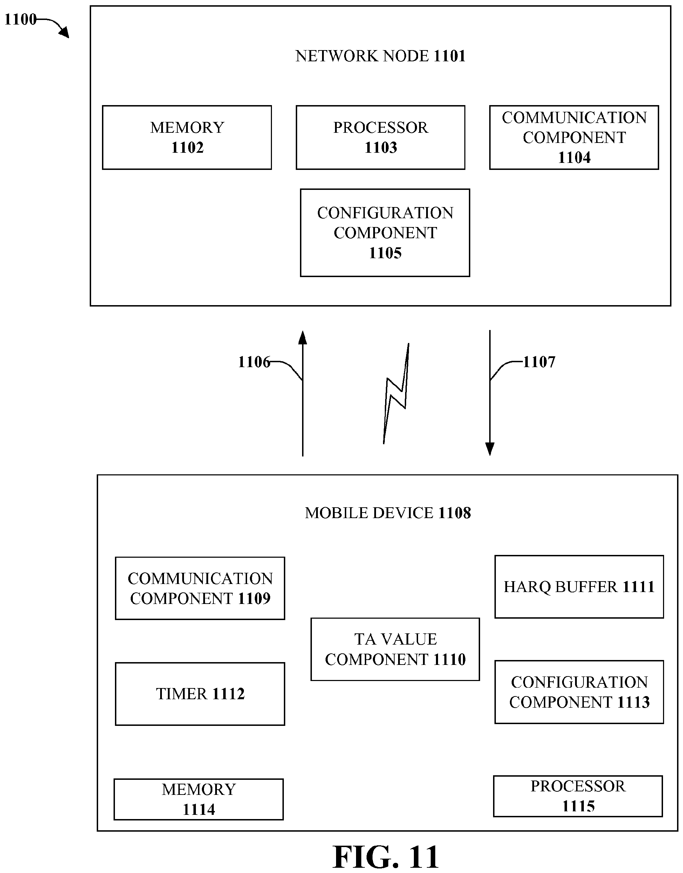

FIG. 11 illustrates an example, non-limiting wireless communications system **1100** including a mobile device (or UE) **1108** and a network node **1101.** Network node **1101** can include memory **1102,** processor **1103,** communication component **1104,** and configuration component **1105.** Communication component **1104** can be a transmitter/receiver configured to transmit to and/or receive data from the mobile device **1108,** other network nodes, and/or other mobile devices. Through the communication component **1104,** the network node **1101** can concurrently transmit and receive data, can transmit and receive data at different times, or combinations thereof. Communication component **1104** may transmit to mobile device **1108** through the use of beamforming techniques, as described more fully herein. The network node **1101** can also comprise a memory **1102** operatively coupled to a processor **1103.** The memory **1102** can facilitate action to control communication between the network node **1101** and the mobile device **1108,** such that the non-limiting communications system **1100** can employ stored protocols and/or algorithms to achieve improved communications in a wireless network as described herein. Configuration component **1105** stores configuration information, e.g, for UL control signaling, a downlink assignment, an uplink grant, or periodic resources, and is operatively coupled to communication component **1104** to communicate with mobile device **1108** through downlink **1107.** The network node **1101** may receive data from mobile device **1108** through uplink **1106.** While a single uplink **1106** and downlink **1107** are illustrated, mobile device **1107** and network node **1101** may communicate through multiple uplinks and downlinks, as described more fully herein.

The mobile device **1108** can include communication component **1109,** TA value component **1110,** timer **1112,** HARQ buffer **1111,** configuration component **1113,** memory **1114,** and processor **1115.** Communication component **1109** is configured to transmit and/or receive data to/from network node **1101,** other network nodes, and/or other mobile devices. Through the communication component **1109,** the mobile device **1108** can concurrently transmit and receive data, transmit and receive data at different times, or combinations thereof. Communication component **1109** may transmit to network node **1101** through the use of beamforming techniques, as described more fully herein. The HARQ buffer **1111** stores information that is to be transmitted to network node **1101** through uplink **1106.** Configuration component **1113** stores configuration information, e.g., for UL control signaling, a downlink assignment, an uplink grant, or periodic resources, and is operatively coupled to communication component to receive information from network node **1101** through downlink **1107.** TA value component **1110** stores timing advance values for all uplinks, including uplink **1106,** used to communicate with network node **1101.** Timer **1112** contains timer information for each timing advance value stored in TA value component **1110.** If the TA value associated with uplink **1106** becomes invalid, e.g., by expiration of an associated timer stored at timer **1112,** then communication component **1109** will cease transmission on uplink **1106** while maintaining connection through uplinks with valid timer advance values. When the timer advance value becomes invalid, HARQ buffer 1111 will not be flushed of any data to be transmitted on uplink **1106,** unless all timing advance values stored in TA value component **1110** have become invalid. In addition, configuration component **1113** will release and/or clear any configuration information associated with the invalid timing advance value. Mobile device **1108** can also include a memory **1114** and processor **1115,** which may be operatively coupled.

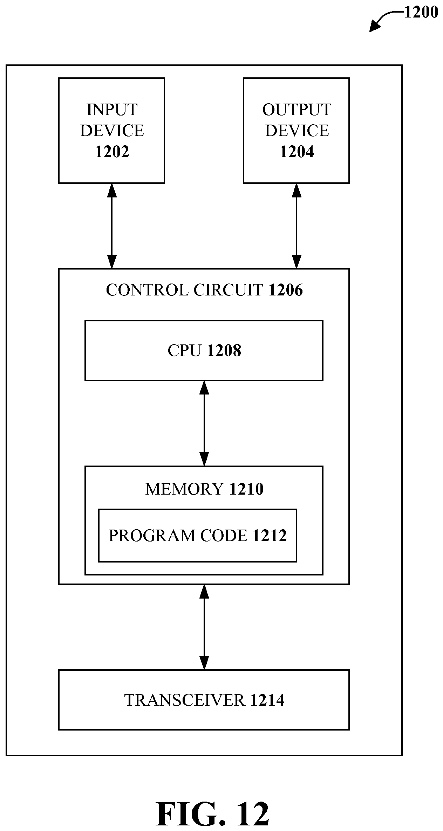

Turning to FIG. 12, illustrated is an alternative simplified functional block diagram of a communication device **1200** in accordance with one or more embodiments described herein. As illustrated in FIG. 12, the communication device **1200** in a wireless communication system can be utilized for realizing the mobile devices (or UEs) **114** and **120** in FIG. 1, and the wireless communications system can be a 5G system. The communication device **1200** can include an input device **1202,** an output device **1204,** a control circuit **1206,** a central processing unit (CPU) **1208,** a memory **1210,** a program code **1212,** and a transceiver **1214.** The control circuit **1206** executes the program code **1212** in the memory **1210** through the CPU **1208,** thereby controlling an operation of the communications device **1200.** The program code can be executed to perform the techniques illustrated in FIGS. 3-11. The communications device **1200** can receive signals input by a user through the input device **1202,** such as a keyboard or keypad, and can output images and sounds through the output device **1204,** such as a monitor or speakers. The transceiver **1214** is used to receive and transmit wireless signals, delivering received signals to the control circuit **1206,** and outputting signals generated by the control circuit **1206** wirelessly. The communication device **1200** in a wireless communication system can also be utilized for realizing the network node **100** in FIG. 1.

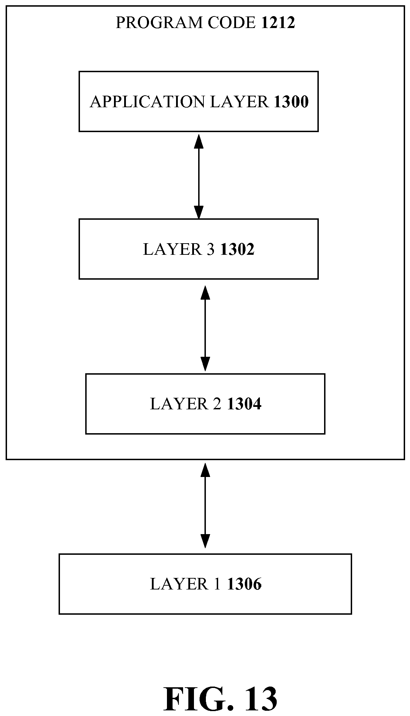

FIG. 13 is a simplified block diagram of the program code **1212** shown in FIG. 12, in accordance with one or more embodiments described herein. In this embodiment, the program code **1212** includes an application layer **1300,** a Layer 3 portion **1302,** and a Layer 2 portion **1304,** and is coupled to a Layer 1 portion **1306.** The Layer 3 portion **1302** generally performs radio resource control. The Layer 2 portion **1304** generally performs link control. The Layer 1 portion **1306** generally performs physical connections. For a 5G system, the Layer 2 portion **1304** may include a Radio Link Control (RLC) layer and a Medium Access Control (MAC) layer. The Layer 3 portion **1302** may include a Radio Resource Control (RRC) layer.

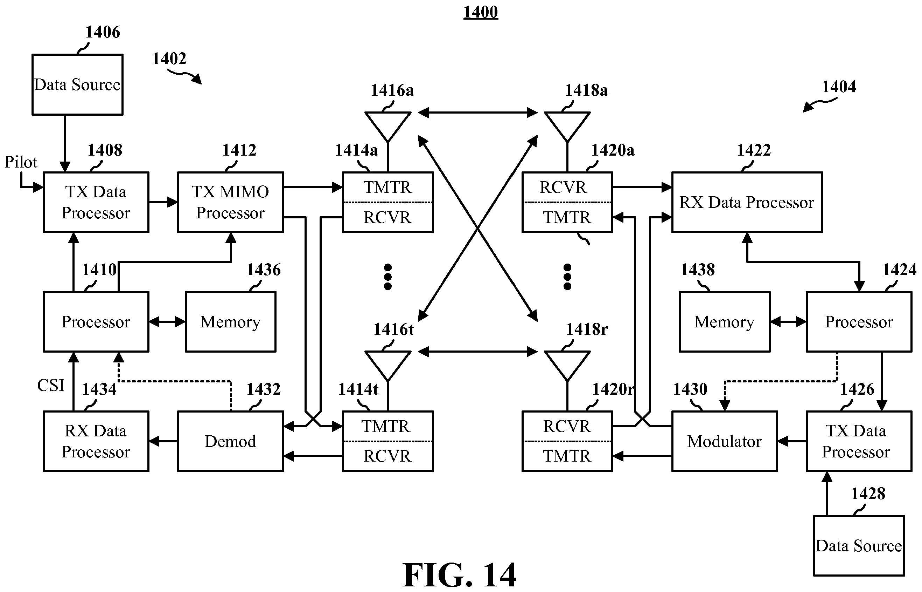

FIG. 14 illustrates a simplified block diagram of an embodiment a MIMO system **1400** that includes of a transmitter system **1402** (also known as the access network) and a receiver system **1404** (also known as user equipment (UE)) in accordance with one or more embodiments described herein. At the transmitter system **1402,** traffic data for a number of data streams is provided from a data source **1406** to a transmit (TX) data processor **1408.**

In one embodiment, each data stream is transmitted over a respective transmit antenna. TX data processor **1408** formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (e.g., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor **1410.**

The modulation symbols for all data streams are then provided to a TX MIMO processor **1412,** which may further process the modulation symbols (e.g., for OFDM). TX MIMO processor **1412** then provides *N_{T}* modulation symbol streams to *N_{T}* transmitters (TMTR) **1414a** through **1414t.** In certain embodiments, TX MIMO processor **1412** applies beamforming weights to the symbols of the data streams and to the antenna from which the symbol is being transmitted. Each transmitter **1414** receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters **1414a** through **1414t** are then transmitted from *N_{T}* antennas **1416a** through **1416t,** respectively.

At receiver system **1404,** the transmitted modulated signals are received by *N_{R}* antennas **1418a** through **1418r** and the received signal from each antenna **1418** is provided to a respective receiver (RCVR) **1420a** through **1420r.** Each receiver **1420** conditions (e.g., filters, amplifies, and downconverts) a respective received signal, digitizes the conditioned signal to provide samples, and further processes the samples to provide a corresponding "received" symbol stream.

An RX data processor **1422** then receives and processes the *N_{R}* received symbol streams *from N_{R}* receivers **1420** based on a particular receiver processing technique to provide *N_{T}* "detected" symbol streams. The RX data processor **1422** then demodulates, deinterleaves, and decodes each detected symbol stream to recover the traffic data for the data stream. The processing by RX data processor **1422** is complementary to that performed by TX MIMO processor **1412** and TX data processor **1408** at transmitter system **1402.**

A processor **1424** periodically determines which pre-coding matrix to use. Processor **1424** formulates a reverse link message comprising a matrix index portion and a rank value portion. The reverse link message may comprise various types of information regarding the communication link and/or the received data stream. The reverse link message is then processed by a TX data processor **1426,** which also receives traffic data for a number of data streams from a data source **1428,** modulated by a modulator **1430,** conditioned by transmitters **1420a** through **1420r** , and transmitted back to transmitter system **1402.**

At transmitter system **1402,** the modulated signals from receiver system **1404** are received by antennas **1416,** conditioned by receivers **1414,** demodulated by a demodulator **1432,** and processed by a RX data processor **1434** to extract the reserve link message transmitted by the receiver system **1404.** Processor **1410** then determines which pre-coding matrix to use for determining the beamforming weights and then processes the extracted message.

Memory **1436** can be used to temporarily store some buffered/computational data from **1432** or **1434** through processor **1410,** store some buffered data from **1406,** or store some specific program codes. Further, memory **1438** may be used to temporarily store some buffered/computational data from **1422** through processor **1424,** store some buffered data from **1428,** or store some specific program codes.

One aspect of this disclosure is a method of operating a UE, comprising maintaining multiple TA values for a serving cell, wherein the multiple TA values include a first TA value and a second TA value, flushing a HARQ buffer associated with the serving cell if all of the multiple TA values are invalid, and refraining from flushing the HARQ buffer if the first TA value is invalid and the second TA value is valid. Preferably, the HARQ buffer stores uplink data to be transmitted in the serving cell. Preferably, the data stored in the HARQ buffer is not transmitted or retransmitted if the HARQ buffer is flushed. Preferably, the first TA value is utilized for transmitting on a first beam and the second TA value is used for transmitting on a second beam.

Preferably, the first TA value is utilized for UL transmissions to a first TRP and the second TA value is utilized for UL transmissions to a second TRP. Preferably, the first TA value is utilized for transmitting on a first beam and the second TA value is used for transmitting on a second beam. Preferably, the multiple TA values are utilized for UL transmissions in the serving cell. Preferably, each of the multiple TA values is utilized for UL transmissions to a different TRP within the serving cell. Preferably, each of the multiple TA values is utilized for UL transmissions on a different beam within the serving cell. Preferably, each of the multiple TA values is associated with a timer.

Preferably, one of the multiple TA values is invalid if a timer associated with the TA value expires. Preferably, one of the multiple TA values is valid if a timer associated with the TA value is running. Preferably, one of the multiple TA values is associated with a TRP or beam in the serving cell. Preferably, one of the multiple TA values is invalid if all TRPs associated with the TA value are not detectable. Preferably, one of the multiple TA values is invalid if all TRPs associated with the TA value are not serving one or more TRPs of the UE. Preferably, one of the multiple TA values is invalid if all beams associated with the TA value are not serving beams of the UE. Preferably, one of the multiple TA values is invalid if all beams associated with the TA value are not candidate beams of the UE.

Preferably, validity of each of the multiple TA values is determined by the status of a timer associated with the TA value. Preferably, each of the multiple TA values is associated with a different TRP or a different beam of the serving cell. Preferably, the method further comprises: clearing periodic resources, a configured downlink assignment, and/or a configured uplink grant associated with the serving cell if all of the multiple TA values are invalid; and refraining from clearing the periodic resources, the configured downlink assignment, and/or the configured uplink grant associated with the serving cell if the first TA value is invalid and the second TA value is valid. Alternatively preferably, the method further comprises: clearing periodic resources, a configured downlink assignment, and/or a configured uplink grant associated with the serving cell if the first TA value is invalid and the second TA value is valid. Preferably, one of the multiple TA values is invalid if all beams associated with the TA value are not qualified.

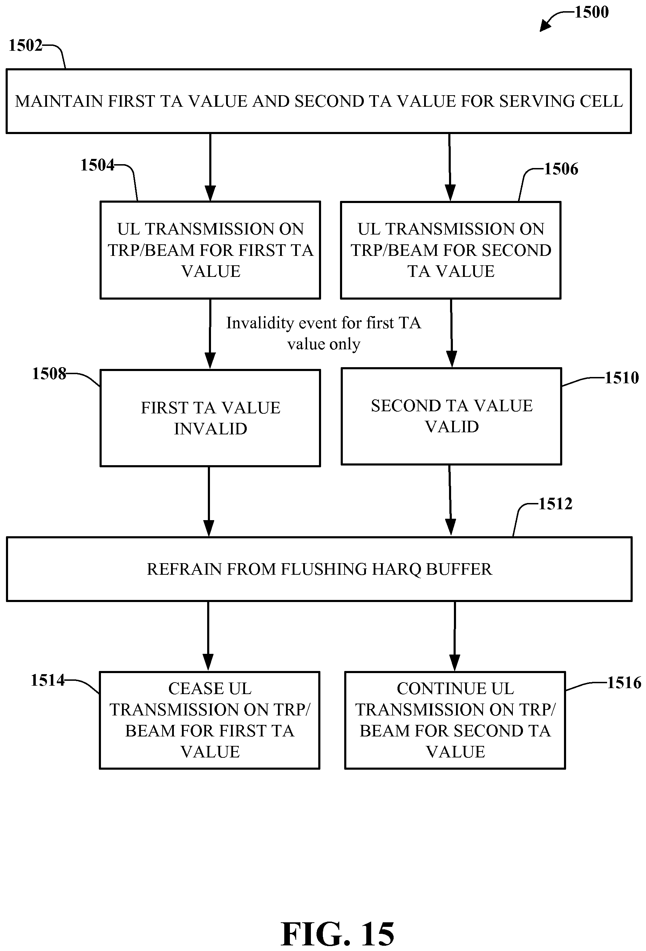

FIG. 15 illustrates an example, non-limiting methodology for handling a HARQ buffer and UL transmission in a UE that is maintaining at least two TA values. At Step 1502 of flow diagram **1500,** the UE maintains a first TA value and a second TA value for a serving cell. Each TA value is associated with a different TRP or beam. The UE performs UL transmission at Step **1504** on a TRP or beam associated with the first TA value, and, at Step **1506,** on a TRP or beam associated with the second TA value. Subsequently, an invalidity event may occur with respect
to the first TA value. The invalidity event, by way of non-limiting example, may consist of the expiration of a timer associated with the first TA value, all TRPs associated with the first TA value not being detectable, or all beams associated with the first TA value not being serving beams of the UE. However, as depicted in FIG. 15, the invalidity event affects only the first TA value, and not the second TA value. In such an event, at Step **1512,** the UE will refrain from flushing the HARQ buffer, which contains data to be transmitted on the uplink. Subsequently, at Step **1514,** the UE will cease UL transmission on the TRP or beam associated with the first TA value. At Step **1516,** the UE will continue UL transmission on the TRP or beam associated with the second TA value.

One embodiment of this disclosure, which might be combined with the above aspects and/or methodologies, preferably further comprises stopping a timer associated with one of the multiple TA values if the TA value is invalid. Preferably, the UE has no more than one serving cell. Preferably, the serving cell is associated with a gNB and the UE is capable of communicating with a second serving cell. Another embodiment, which might be combined with the above aspects and/or methodologies and/or embodiment, preferably further comprises clearing periodic resources, a configured downlink assignment, and/or a configured uplink grant associated with the serving cell if the first TA value is invalid and the second TA value is valid. Preferably, one of the periodic resources, configured downlink assignment, and/or configured uplink grant is associated with the first TA value. Preferably, one of the periodic resources, configured downlink assignment, and/or configured uplink grant is utilized for communication on a beam associated with the first TA value.

In one aspect of this disclosure, a method for operating a UE comprises receiving a configuration for UL control signaling associated with a serving cell, maintaining multiple TA values for the serving cell, wherein the multiple TA values include a first TA value and a second TA value, releasing the configuration if all of the multiple TA values are invalid, and refraining from releasing the configuration if the first TA value is invalid and the second TA value is valid. Preferably, the serving cell includes one or more TRPs or beams, and the configuration is associated with all TRPs and beams of the serving cell. Preferably, the UL control signaling includes a periodic UL reference signal or an aperiodic UL reference signal. Preferably, the UL control signaling includes an aperiodic UL reference signal. Preferably, the UL control signaling includes a periodic channel quality report or an aperiodic channel quality report. Preferably, the UL control signaling includes an aperiodic channel quality report. Preferably, the UL control signaling is transmitted in the serving cell.

Preferably, the releasing step comprises refraining from transmitting UL control signaling derived from the configuration. Preferably, the first TA value is utilized for transmitting on a first beam and the second TA value is used for transmitting on a second beam.

In one aspect of this disclosure, a method of operating a UE comprises maintaining multiple TA values for a serving cell, wherein the multiple TA values include a first TA value and a second TA value, receiving a signaling to configure periodic resources associated with the serving cell for DL or UL transmissions, clearing the periodic resources if all of the multiple TA values are invalid, and refraining from clearing the periodic resources if the first TA value is invalid and the second TA value is valid. Preferably, the DL or UL transmissions are performed in the serving cell. Preferably, the configured periodic resources are associated with all TRPs and/or beams of the serving cell.

Preferably, the clearing step comprises refraining from transmitting UL transmissions. Preferably, the clearing step comprises not receiving DL transmissions derived from the periodic resources. Preferably, the first TA value is utilized for transmitting on a first beam and the second TA value is used for transmitting on a second beam. Preferably, validity of each of the multiple TA values is determined by the status of a timer associated with the TA value. Preferably, each of the multiple TA values is associated with a different TRP or a different beam of the serving cell.

One embodiment, which might be combined with the above aspects and/or methodologies and/or embodiments, preferably further comprises clearing one from a group consisting of periodic resources, a configured downlink assignment, and a configured uplink grant associated with the serving cell if all of the multiple TA values are invalid, and refraining from clearing the periodic resources, the configured downlink assignment, and/or the configured uplink grant if the first TA value is invalid and the second TA value is valid. Another embodiment, which might be combined with the above aspects and/or methodologies and/or embodiments, preferably further comprises clearing one from a group consisting of periodic resources, a configured downlink assignment, and a configured uplink grant associated with the serving cell if the first TA value is invalid and the second TA value is valid.

One aspect of this disclosure is a method of operating a UE, comprising maintaining multiple TA values for a serving cell, wherein the multiple TA values include a first TA value and a second TA value, and maintaining a status of the first TA value if the second TA value is invalid. In another aspect, a method of operating a UE comprises maintaining multiple values for a serving cell, wherein the multiple TA values include a first TA value and a second TA value, and maintaining a status of the first TA value if a different one of the multiple TA values is invalid. Preferably, the status of the first TA value includes an indication that the first TA value is valid. Preferably, maintaining the status of the first TA value comprises storing an indication that the first TA value is valid. Preferably, maintaining the status of the first TA value comprises refraining from changing the status of the first TA value if a different one of the multiple TA values is invalid. Preferably, maintaining the status of the first TA value comprises refraining from changing the status of a timer associated with the first TA value. Preferably, the first TA value is utilized for transmitting on a first beam and the second TA value is used for transmitting on a second beam. Preferably, validity of each of the multiple TA values is determined by the status of a timer associated with the TA value. Preferably, each of the multiple TA values is associated with a different TRP or a different beam of the serving cell.

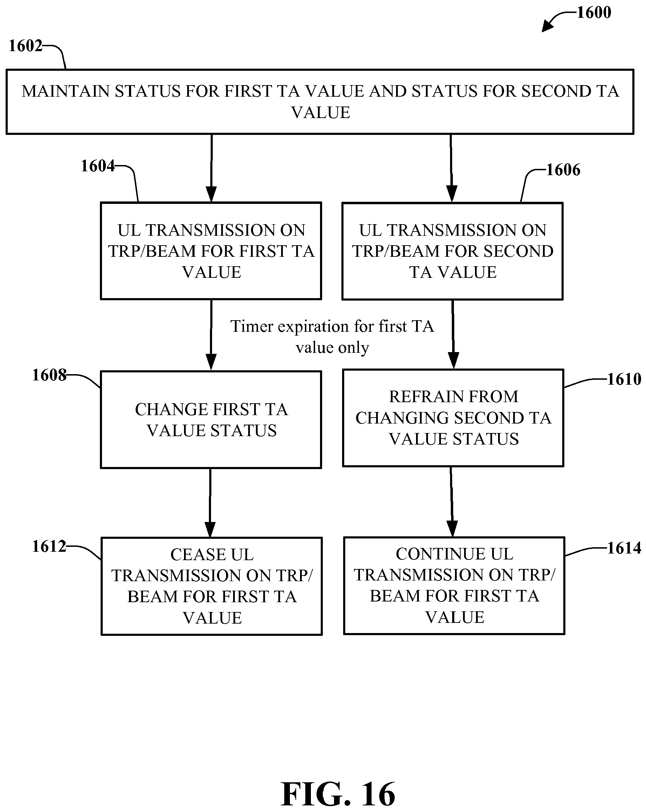

FIG. 16 illustrates an example, non-limiting methodology for maintaining at least two TA values in a UE. At Step **1602** of flow diagram **1600,** the UE maintains a first TA value and a second TA value. Each TA value is associated with a different TRP or beam. To maintain the TA values, the UE may store an indication for each TA value that the TA value is valid. The UE performs UL transmission at Step **1604** on a TRP or beam associated with the first TA value, and, at Step **1606,** on a TRP or beam associated with the second TA value. Each TA value is associated with a different timer. As illustrated in FIG. 16, the timer associated with the first TA value may expire, while the timer associated with the second TA value may remain running.. Accordingly, at Step **1608,** the UE may change the status of the first TA value, while, at Step **1610,** refraining from changing the status of the second TA value. At Step **1612,** the UE will cease UL transmission on the TRP or beam associated with the first TA value. At Step **1614,** the UE will continue UL transmission on the TRP or beam associated with the second TA value One embodiment, which might be combined with the above aspects and/or methodologies and/or embodiments, preferably further comprises clearing one from a group consisting of periodic resources, a configured downlink assignment, and/or a configured uplink grant associated with the serving cell if all of the multiple TA values are invalid, and refraining from clearing the periodic resources, the configured downlink assignment, and/or the configured uplink grant if the first TA value is invalid and the second TA value is valid. Another embodiment, which might be combined with the above aspects and/or methodologies and/or embodiments, preferably further comprises clearing one from a group consisting of periodic resources, a configure downlink assignment, and/or a configured uplink grant associated with the serving cell if the first TA value is invalid and the second TA value is valid.

Disclosed herein is a communication device comprising a control circuit, a processor installed in the control circuit, and a memory installed in the control circuit and coupled to the processor. In one aspect, the processor is configured to execute a program code stored in the memory to perform the steps of receiving a configuration for UL control signaling associated with a serving cell, maintaining multiple TA values for the serving cell, wherein the multiple TA values include a first TA value and a second TA value, releasing the configuration if all of the multiple TA values are invalid, and refraining from releasing the configuration if the first TA value is invalid and the second TA value is valid. In one example, the configuration associated with the serving cell comprises one or more of a configuration for UL control signaling or a configuration for periodic resources associated with the serving cell.

In another aspect, the processor is configured to execute a program code stored in the memory to perform the steps of maintaining multiple TA values for a serving cell wherein the multiple TA values include a first TA value and a second TA value, and maintaining a status of the first TA value if the second TA value is invalid. In a further aspect, the processor is configured to execute a program code stored in the memory to perform the steps of maintaining multiple TA values for a serving cell, wherein the multiple TA values include a first TA value and a second TA value, receiving a signaling to configure periodic resources associated with the serving cell for DL or UL transmissions, clearing the periodic resources if all of the multiple TA values are invalid, and refraining from clearing the periodic resources if the first TA is invalid and the second TA value is valid.

One aspect of this disclosure is a network node comprising means for communicating on a first beam with a UE and ceasing transmission if a first TA value is invalid, and means for communicating on a second beam with the UE simultaneously with communications on the first beam, continuing transmission if the second TA value is valid. Another aspect is a communication system comprising a network node, a serving cell associated with the network node, a first beam associated with a first TA value, a second beam associated with a second TA value, and a UE capable of communicating on the first beam and on the second beam, wherein the UE does not transmit on the first beam if the first TA value is invalid and transmits on the second beam if the second TA value is valid.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects, concurrent channels may be established based on pulse repetition frequencies. In some aspects, concurrent channels may be established based on pulse position or offsets. In some aspects, concurrent channels may be established based on time hopping sequences. In some aspects, concurrent channels may be established based on pulse repetition frequencies, pulse positions or offsets, and time hopping sequences. Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects, a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

Reference throughout this specification to "one embodiment," or "an embodiment," means that a particular feature, structure, or characteristic described in connection with the embodiment is included in at least one embodiment. Thus, the appearances of the phrase "in one embodiment," "in one aspect," or "in an embodiment," in various places throughout this specification are not necessarily all referring to the same embodiment. Furthermore, the particular features, structures, or characteristics can be combined in any suitable manner in one or more embodiments.

As used in this disclosure, in some embodiments, the terms "component," "system," "interface," and the like are intended to refer to, or comprise, a computer-related entity or an entity related to an operational apparatus with one or more specific functionalities, wherein the entity can be either hardware, a combination of hardware and software, software, or software in execution, and/or firmware. As an example, a component can be, but is not limited to being, a process running on a processor, a processor, an object, an executable, a thread of execution, computer-executable instructions, a program, and/or a computer. By way of illustration and not limitation, both an application running on a server and the server can be a component One or more components can reside within a process and/or thread of execution and a component can be localized on one computer and/or distributed between two or more computers. In addition, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software application or firmware application executed by one or more processors, wherein the processor can be internal or external to the apparatus and can execute at least a part of the software or firmware application. As yet another example, a component can be an apparatus that provides specific functionality through electronic components without mechanical parts, the electronic components can comprise a processor therein to execute software or firmware that confer(s) at least in part the functionality of the electronic components. In an aspect, a component can emulate an electronic component via a virtual machine, e.g., within a cloud computing system. While various components have been illustrated as separate components, it will be appreciated that multiple components can be implemented as a single component, or a single component can be implemented as multiple components, without departing from example embodiments.

In addition, the words "example" and "exemplary" are used herein to mean serving as an instance or illustration. Any embodiment or design described herein as "example" or "exemplary" is not necessarily to be construed as preferred or advantageous over other embodiments or designs. Rather, use of the word example or exemplary is intended to present concepts in a concrete fashion. As used in this application, the term "or" is intended to mean an inclusive "or" rather than an exclusive "or." That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Moreover, terms such as "mobile device equipment," "mobile station," "mobile," subscriber station," "access terminal," "terminal," "handset," "communication device," "mobile device" (and/or terms representing similar terminology) can refer to a wireless device utilized by a subscriber or mobile device of a wireless communication service to receive or convey data, control, voice, video, sound, gaming or substantially any data-stream or signaling-stream. The foregoing terms are utilized interchangeably herein and with reference to the related drawings. Likewise, the terms "access point (AP)," "Base Station (BS)," BS transceiver, BS device, cell site, cell site device, "Node B (NB)," "evolved Node B (eNode B)," "home Node B (HNB)" and the like, are utilized interchangeably in the application, and refer to a wireless network component or appliance that transmits and/or receives data, control, voice, video, sound, gaming or substantially any data-stream or signaling-stream from one or more subscriber stations. Data and signaling streams can be packetized or frame-based flows.

Furthermore, the terms "device," "communication device," "mobile device," "subscriber," "customer entity," "consumer," "customer entity," "entity" and the like are employed interchangeably throughout, unless context warrants particular distinctions among the terms. It should be appreciated that such terms can refer to human entities or automated components supported through artificial intelligence (e.g., a capacity to make inference based on complex mathematical formalisms), which can provide simulated vision, sound recognition and so forth. Embodiments described herein can be exploited in substantially any wireless communication technology, comprising, but not limited to, wireless fidelity (Wi-Fi), global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra mobile broadband (UMB), high speed packet access (HSPA), Z-Wave, Zigbee and other 802.XX wireless technologies and/or legacy telecommunication technologies.

Systems, methods and/or machine-readable storage media for facilitating a two-stage downlink control channel for 5G systems are provided herein. Legacy wireless systems such as LTE, Long-Term Evolution Advanced (LTE-A), High Speed Packet Access (HSPA) etc. use fixed modulation format for downlink control channels. Fixed modulation format implies that the downlink control channel format is always encoded with a single type of modulation (e.g., quadrature phase shift keying (QPSK)) and has a fixed code rate. Moreover, the forward error correction (FEC) encoder uses a single, fixed mother code rate of 1/3 with rate matching. This design does not taken into the account channel statistics. For example, if the channel from the BS device to the mobile device is very good, the control channel cannot use this information to adjust the modulation, code rate, thereby unnecessarily allocating power on the control channel. Similarly, if the channel from the BS to the mobile device is poor, then there is a probability that the mobile device might not able to decode the information received with only the fixed modulation and code rate. As used herein, the term "infer" or "inference" refers generally to the process of reasoning about, or inferring states of, the system, environment, user, and/or intent from a set of observations as captured via events and/or data. Captured data and events can include user data, device data, environment data, data from sensors, sensor data, application data, implicit data, explicit data, etc. Inference can be employed to identify a specific context or action, or can generate a probability distribution over states of interest based on a consideration of data and events, for example.

Inference can also refer to techniques employed for composing higher-level events from a set of events and/or data. Such inference results in the construction of new events or actions from a set of observed events and/or stored event data, whether the events are correlated in close temporal proximity, and whether the events and data come from one or several event and data sources. Various classification schemes and/or systems (e.g., support vector machines, neural networks, expert systems, Bayesian belief networks, fuzzy logic, and data fusion engines) can be employed in connection with performing automatic and/or inferred action in connection with the disclosed subject matter.

In addition, the various embodiments can be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, machine-readable device, computer-readable carrier, computer-readable media, machine-readable media, computer-readable (or machine-readable) storage/communication media. For example, computer-readable media can comprise, but are not limited to, a magnetic storage device, e.g., hard disk; floppy disk; magnetic strip(s); an optical disk (e.g., compact disk (CD), a digital video disc (DVD), a Blu-ray Disc™ (BD)); a smart card; a flash memory device (e.g., card, stick, key drive); and/or a virtual device that emulates a storage device and/or any of the above computer-readable media. Of course, those skilled in the art will recognize many modifications can be made to this configuration without departing from the scope of the various embodiments. The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the subject matter has been described herein in connection with various embodiments and corresponding FIGs, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In summary, the present invention relates to a method and apparatus for handling upon UL timing asynchronism in a wireless communication system. The user equipment (UE) maintains a timing advance (TA) value for each of a plurality of beams used for uplink transmissions to a cell, or a transmitter/reception point (TRP) operatively connected to a gNodeB. If less than all of the maintained TA values become invalid, then the UE will continue transmission on any beam for which the TA value remains valid, while discontinuing transmission on any beam with an invalid TA value.

## Claims

1. A method of operating a user equipment, UE, comprising:
maintaining multiple timing advance, TA, values for a serving cell, wherein the multiple TA values include a first TA value and a second TA value (602);
flushing a Hybrid Automatic Repeat Request, HARQ, buffer associated with the serving cell when all of the multiple TA values are invalid (604); and
refraining from flushing the HARQ buffer when the first TA value is invalid and the second TA value is valid (606).

2. The method of claim 1, wherein the HARQ buffer stores uplink data to be transmitted in the serving cell.

3. A method of operating a user equipment, UE, comprising:
receiving a configuration for uplink, UL, control signaling associated with a serving cell (702);
maintaining multiple timing advance, TA, values for the serving cell, wherein the multiple TA values include a first TA value and a second TA value (704);
releasing the configuration when all of the multiple TA values are invalid (706); and
refraining from releasing the configuration when the first TA value is invalid and the second TA value is valid (708).

4. The method of claim 3, wherein the UL control signaling includes a scheduling request, periodic UL reference signal, aperiodic UL reference signal, periodic channel quality report, and/or aperiodic channel quality report.

5. The method of claim 3 or 4, wherein the configuration is applicable to at least one transmission/reception point, TRP, or beam, of the serving cell,
associated with the first TA value as well as at least one TRP or beam, of the serving cell, associated with the second TA value.

6. The method of any one of claims 3 to 5, wherein the UE establishes an association between the configuration and a TRP or a beam based on information provided by a network node.

7. The method of any one of claims 1 to 6, wherein the UE establishes an association between a TA value and a TRP or a beam based on information provided by a network node.

8. The method of any one of claims 1 to 7, wherein validity of each of the multiple TA values is determined by the status of a timer associated with the TA value.

9. The method of any one of claims 1 to 8, wherein each of the multiple TA values is associated with a different TRP or a different beam of the serving cell.

10. The method of any one of claims 1 to 9, further comprising:
clearing periodic resources, a configured downlink assignment, and/or a configured uplink grant associated with the serving cell when all of the multiple TA values are invalid; and
refraining from clearing the periodic resources, the configured downlink assignment, and/or the configured uplink grant when the first TA value is invalid and the second TA value is valid.

11. The method of claim 10, wherein the periodic resources, the configured downlink assignment, or the configured uplink grant is applicable to at least one TRP or beam, of the serving cell, associated with the first TA value as well as at least one TRP or beam, of the serving cell, associated with the second TA value.

12. The method of any one of claims 1 to 9, further comprising:
clearing periodic resources, a configured downlink assignment, and/or a configured uplink grant associated with the serving cell when the first TA value is invalid and the second TA value is valid.

13. The method of any one of claims 10 to 12, wherein the UE establishes an association between the periodic resources, the configured downlink assignment, or the configured uplink grant and a TRP or a beam based on information provided by a network node.

14. The method of any one of claims 1 to 13, wherein one of the multiple TA values is invalid when all beams associated with the TA value are not qualified.

15. A communication device comprising:
a control circuit (1206);
a processor (1208) installed in the control circuit (1206);
a memory (1210) installed in the control circuit (1206) and coupled to the processor (1208); and
wherein the processor (1208) is configured to execute a program code (1212) stored in the memory (1210) to perform the steps as defined in any one of the preceding claims.

## Patentansprüche

1. Verfahren eines Betreibens einer Teilnehmerausrüstung, UE, umfassend:
Pflegen mehrerer Vorhaltezeit-, TA-, Werte für eine bedienende Zelle, wobei die mehreren TA-Werte einen ersten TA-Wert und einen zweiten TA-Wert aufweisen (602);
Leeren eines Hybrid-Automatic-Repeat-Request-, HARQ-, Puffers, der zu der bedienenden Zelle gehört, wenn alle der mehreren TA-Werte ungültig sind (604); und
Unterlassen des Leerens des HARQ-Puffers, wenn der erste TA-Wert ungültig ist und der zweite TA-Wert gültig ist (606).

2. Verfahren gemäß Anspruch 1, wobei der HARQ-Puffer Uplink-Daten speichert, die in der bedienenden Zelle zu übertragen sind.

3. Verfahren eines Betreibens einer Teilnehmerausrüstung, UE, umfassend:
Erhalten einer Konfiguration für eine Uplink-, UL-, Steuerungssignalisierung, die zu einer bedienenden Zelle gehört (702);
Pflegen mehrerer Vorhaltezeit-, TA-, Werte für die bedienende Zelle, wobei die mehreren TA-Werte einen ersten TA-Wert und einen zweiten TA-Wert aufweisen (704);
Freigeben der Konfiguration, wenn alle der mehreren TA-Werte ungültig sind (706); und
Unterlassen des Freigebens der Konfiguration, wenn der erste TA-Wert ungültig ist und der zweite TA-Wert gültig ist (708).

4. Verfahren gemäß Anspruch 3, wobei die UL-Steuerungssignalisierung eine Zeiteinplanungsanforderung, ein periodisches UL-Referenzsignal, ein aperiodisches UL-Referenzsignal, einen periodischen Kanalqualitätsbericht und/oder einen aperiodischen Kanalqualitätsbericht umfasst.

5. Verfahren gemäß Anspruch 3 oder 4, wobei die Konfiguration sowohl auf mindestens einen Sende-/Empfangspunkt, TRP, oder Strahl der bedienenden Zelle, die zu dem ersten TA-Wert gehören, als auch auf mindestens einen TRP oder Strahl der bedienenden Zelle, die zu dem zweiten TA-Wert gehören, anwendbar ist.

6. Verfahren gemäß einem der Ansprüche 3 bis 5, wobei die UE eine Verbindung zwischen der Konfiguration und einem TRP oder einem Strahl basierend auf Informationen herstellt, die durch einen Netzwerkknoten bereitgestellt werden.

7. Verfahren gemäß einem der Ansprüche 1 bis 6, wobei die UE eine Verbindung zwischen einem TA-Wert und einem TRP oder einem Strahl basierend auf Informationen herstellt, die durch einen Netzwerkknoten bereitgestellt werden.

8. Verfahren gemäß einem der Ansprüche 1 bis 7, wobei die Gültigkeit jedes der mehreren TA-Werte durch den Status eines Zeitgebers bestimmt wird, der zu dem TA-Wert gehört.

9. Verfahren gemäß einem der Ansprüche 1 bis 8, wobei jeder der mehreren TA-Werte zu einem unterschiedlichen TRP oder einem unterschiedlichen Strahl der bedienenden Zelle gehört.

10. Verfahren gemäß einem der Ansprüche 1 bis 9, weiter umfassend:
Löschen von periodischen Ressourcen, einer konfigurierten Downlink-Zuweisung und/oder einer konfigurierten Uplink-Bewilligung, die zu der bedienenden Zelle gehören, wenn alle der mehreren TA-Werte ungültig sind; und
Unterlassen des Löschens der periodischen Ressourcen, der konfigurierten Downlink-Zuweisung und/oder der konfigurierten Uplink-Bewilligung, wenn der erste TA-Wert ungültig ist und der zweite TA-Wert gültig ist.

11. Verfahren gemäß Anspruch 10, wobei die periodischen Ressourcen, die konfigurierte Downlink-Zuweisung oder die konfigurierte Uplink-Bewilligung sowohl auf mindestens einen TRP oder Strahl der bedienenden Zelle, die zu dem ersten TA-Wert gehören, als auch auf mindestens einen TRP oder Strahl der bedienenden Zelle, die zu dem zweiten TA-Wert gehören, anwendbar sind.

12. Verfahren gemäß einem der Ansprüche 1 bis 9, weiter umfassend:
Löschen von periodischen Ressourcen, einer konfigurierten Downlink-Zuweisung und/oder einer konfigurierten Uplink-Bewilligung, die zu der bedienenden Zelle gehören, wenn der erste TA-Wert ungültig ist und der zweite TA-Wert gültig ist.

13. Verfahren gemäß einem der Ansprüche 10 bis 12, wobei die UE eine Verbindung zwischen den periodischen Ressourcen, der konfigurierten Downlink-Zuweisung oder der konfigurierten Uplink-Bewilligung und einem TRP oder einem Strahl basierend auf Informationen herstellt, die durch einen Netzwerkknoten bereitgestellt werden.

14. Verfahren gemäß einem der Ansprüche 1 bis 13, wobei einer der mehreren TA-Werte ungültig ist, wenn alle Strahlen, die zu dem TA-Wert gehören, nicht qualifiziert sind.

15. Kommunikationsvorrichtung, aufweisend:
eine Steuerungsschaltung (1206);
einen Prozessor (1208), der in der Steuerungsschaltung (1206) installiert ist;
einen Speicher (1210), der in der Steuerungsschaltung (1206) installiert und mit dem Prozessor (1208) verbunden ist; und
wobei der Prozessor (1208) eingerichtet ist, einen Programm-Code (1212), der in dem Speicher (1210) gespeichert ist, auszuführen, um die in einem der vorstehenden Ansprüche definierten Schritte, auszuführen.

## Revendications

1. Procédé de fonctionnement d'un équipement utilisateur, UE, comprenant le fait :
de maintenir de multiples valeurs d'avance de synchronisation, TA, pour une cellule de desserte, où les multiples valeurs TA comportent une première valeur TA et une deuxième valeur TA (602) ;
de vider une mémoire tampon de Demande de Répétition Automatique Hybride, HARQ, associée à la cellule de desserte lorsque toutes les multiples valeurs TA sont invalides (604) ; et
d'éviter de vider la mémoire tampon HARQ lorsque la première valeur TA est invalide et que la deuxième valeur TA est valide (606).

2. Procédé de la revendication 1, dans lequel la mémoire tampon HARQ stocke des données de liaison montante à transmettre dans la cellule de desserte.

3. Procédé de fonctionnement d'un équipement utilisateur, UE, comprenant le fait :
de recevoir une configuration pour la signalisation de commande de liaison montante, UL, associée à une cellule de desserte (702) ;
de maintenir de multiples valeurs d'avance de synchronisation, TA, pour la cellule de desserte, où les multiples valeurs TA comportent une première valeur TA et une deuxième valeur TA (704) ;
de libérer la configuration lorsque toutes les multiples valeurs TA sont invalides (706) ; et
d'éviter de libérer la configuration lorsque la première valeur TA est invalide et que la deuxième valeur TA est valide (708).

4. Procédé de la revendication 3, dans lequel la signalisation de commande UL comporte une demande de programmation, un signal de référence UL périodique, un signal de référence UL apériodique, un rapport de qualité de canal périodique et/ou un rapport de qualité de canal apériodique.

5. Procédé de la revendication 3 ou 4, dans lequel la configuration est applicable à au moins un point d'émission/réception, TRP, ou un faisceau, de la cellule de desserte, associé à la première valeur TA ainsi qu'à au moins un TRP ou un faisceau de la cellule de service, associé à la deuxième valeur TA.

6. Procédé de l'une quelconque des revendications 3 à 5, dans lequel l'UE établit une association entre la configuration et un TRP ou un faisceau sur la base d'informations fournies par un noeud de réseau.

7. Procédé de l'une quelconque des revendications 1 à 6, dans lequel l'UE établit une association entre une valeur TA et un TRP ou un faisceau sur la base d'informations fournies par un noeud de réseau.

8. Procédé de l'une quelconque des revendications 1 à 7, dans lequel la validité de chacune des multiples valeurs TA est déterminée par l'état d'un temporisateur associé à la valeur TA.

9. Procédé de l'une quelconque des revendications 1 à 8, dans lequel chacune des multiples valeurs TA est associée à un TRP différent ou à un faisceau différent de la cellule de desserte.

10. Procédé de l'une quelconque des revendications 1 à 9, comprenant en outre le fait :
d'effacer des ressources périodiques, une attribution de liaison descendante configurée et/ou une autorisation de liaison montante configurée associée(s) à la cellule de desserte lorsque toutes les multiples valeurs TA sont invalides ; et
d'éviter d'effacer les ressources périodiques, l'attribution de liaison descendante configurée et/ou l'autorisation de liaison montante configurée lorsque la première valeur TA est invalide et que la deuxième valeur TA est valide.

11. Procédé de la revendication 10, dans lequel les ressources périodiques, l'attribution de liaison descendante configurée ou l'autorisation de liaison montante configurée est/sont applicable(s) à au moins un TRP ou un faisceau de la cellule de desserte, associé à la première valeur TA ainsi qu'à au moins un TRP ou un faisceau, de la cellule de desserte, associé à la deuxième valeur TA.

12. Procédé de l'une quelconque des revendications 1 à 9, comprenant en outre le fait :
d'effacer des ressources périodiques, une attribution de liaison descendante configurée et/ou une autorisation de liaison montante configurée associée(s) à la cellule de desserte lorsque la première valeur TA est invalide et que la deuxième valeur TA est valide.

13. Procédé de l'une quelconque des revendications 10 à 12, dans lequel l'UE établit une association entre les ressources périodiques, l'attribution de liaison descendante configurée ou l'autorisation de liaison montante configurée et un TRP ou un faisceau sur la base d'informations fournies par un noeud de réseau.

14. Procédé de l'une quelconque des revendications 1 à 13, dans lequel l'une des multiples valeurs TA est invalide lorsque tous les faisceaux associés à la valeur TA ne sont pas qualifiés.

15. Dispositif de communication comprenant :
un circuit de commande (1206) ;
un processeur (1208) installé dans le circuit de commande (1206) ;
une mémoire (1210) installée dans le circuit de commande (1206) et couplée au processeur (1208) ; et
dans lequel le processeur (1208) est configuré pour exécuter un code de programme (1212) stocké dans la mémoire (1210) pour réaliser les étapes telles que définies dans l'une quelconque des revendications précédentes.
